# EUROPEAN PATENT SPECIFICATION

(11) **EP 4 736 134 B1**
(45) Date of publication and mention of the grant of the patent: **28.10.2026**
(21) Application number: 24748479.3
(22) Date of filing: 29.06.2024
(51) Int. Cl.: G06V 10/82, G06V 20/56, B60W 30/08, B60W 50/14, B60W 30/09, B60W 30/095

(54) **SYSTEM AND METHODS FOR PROVIDING DRIVER ASSISTANCE ALERTS USING AN END-TO-END ARTIFICIALLY INTELLIGENT COLLISION AVOIDANCE SYSTEM AND ADVANCED DRIVER ASSISTANCE SYSTEMS**
SYSTEM UND VERFAHREN ZUR BEREITSTELLUNG VON FAHRERASSISTENZALARMEN UNTER VERWENDUNG EINES KÜNSTLICH INTELLIGENTEN END-TO-END-KOLLISIONSVERMEIDUNGSSYSTEMS UND ERWEITERTER FAHRERASSISTENZSYSTEME
SYSTÈME ET PROCÉDÉS POUR FOURNIR DES ALERTES D'AIDE À LA CONDUITE À L'AIDE D'UN SYSTÈME D'ÉVITEMENT DE COLLISION À INTELLIGENCE ARTIFICIELLE DE BOUT EN BOUT ET DE SYSTÈMES AVANCÉS D'AIDE À LA CONDUITE

(30) Priority: 29.06.2023 US 202363524213 P; 31.05.2024 US 202418731115
(43) Date of publication of application: 06.05.2026
(73) Proprietor: HYPRLABS, INC., San Francisco, California 94111 (US)
(72) Inventor: KENTLEY-KLAY, Tim, San Francisco, California 94111 (US); DUVAUD, Werner, San Francisco, California 94111 (US); HAINAUT, Aurèle, San Francisco, California 94111 (US); DELOCHE, Maxime, San Francisco, California 94111 (US); CARRÉ, Ludovic, San Francisco, California 94111 (US)
(74) Representative: Marks & Clerk LLP
(86) International application number: PCT/US2024/036289
(87) International publication number: WO 2025/007079

(56) References cited:
- US-B1- 10 442 443
- NIDAMANURI JASWANTH ET AL: "A Progressive Review: Emerging Technologies for ADAS Driven Solutions", IEEE TRANSACTIONS ON INTELLIGENT VEHICLES IEEE, vol. 7, no. 2, 26 October 2021 (2021-10-26), pages 326 - 341, XP011914250, ISSN: 2379-8858, [retrieved on 20211027], DOI: 10.1109/TIV.2021.3122898
- JELENA KOCIC ET AL: "An End-to-End Deep Neural Network for Autonomous Driving Designed for Embedded Automotive Platforms", SENSORS, vol. 19, no. 9, 3 May 2019 (2019-05-03), pages 2064, XP055759335, DOI: 10.3390/s19092064
- ZHANG XINYU ET AL: "Multi-Modal Fusion Technology Based on Vehicle Information: A Survey", IEEE TRANSACTIONS ON INTELLIGENT VEHICLES, IEEE, vol. 8, no. 6, 17 April 2023 (2023-04-17), pages 3605 - 3619, XP011945028, ISSN: 2379-8858, [retrieved on 20230418], DOI: 10.1109/TIV.2023.3268051
- ABOLFAZL RAZI ET AL: "Deep learning serves traffic safety analysis: A forward-looking review", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 17, no. 1, 27 August 2022 (2022-08-27), pages 22 - 71, XP006117357, ISSN: 1751-956X, DOI: 10.1049/ITR2.12257
- CARION NICOLAS ET AL: "End-to-End Object Detection with Transformers", 1 January 2020, SPRINGER, PAGE(S) 213 - 229, XP047569461

## Description

### PRIORITY APPLICATION

This application claims priority to and the benefit of U.S. Patent Application No. 18/731,115 filed 31 May 2024, titled "System and Methods for Providing Driver Assistance Alerts Using an End-To-End Artificially Intelligent Collision Avoidance System and Advanced Driver Assistance Systems" by inventors Tim Kentley-Klay, Werner Duvad, Aurèle Hainaut, Maxime Deloche and Ludovic Carré (Atty. Docket No. HYPR 1002-1) which claims priority to U.S. Provisional Application 63/524,213 filed 29 June 2023, titled "Scalable Training and Validation for an End-To-End Autonomous Driving Model" by inventors Tim Kentley-Klay, Werner Duvad, Aurèle Hainaut, Maxime Deloche and Ludovic Carré (Atty. Docket No. HYPR 1001-1).

### RELATED CASES

This application is related to contemporaneously filed U.S. CIP Application 18/759,879, filed 29 June 2024, filed titled "System and Methods for Providing Driver Assistance Alerts Using an End-To-End Artificially Intelligent Collision Avoidance System and Advanced Driver Assistance Systems" by inventors Tim Kentley-Klay, Werner Duvad, Aurèle Hainaut, Maxime Deloche and Ludovic Carré (Atty Docket No. HYPR 1002-3).

This application is also related to the following commonly owned applications:
US Patent Application No. 18/431,827, filed 2 February 2024, titled "MultiFunctional Inventory Storage and Delivery System" by inventors Tim Kentley-Klay, Werner Duvad, Aurèle Hainaut, Maxime Deloche and Ludovic Carré (Atty. Docket No. HYPR 1000-2); and
U.S. Provisional Application 63/443,342 filed 3 February 2023, titled "MultiFunctional Inventory Storage and Delivery System" by inventors Tim Kentley-Klay, Werner Duvad, Aurèle Hainaut, Maxime Deloche and Ludovic Carré (Atty Docket No. HYPR 1000-1).

### FIELD OF THE TECHNOLOGY DISCLOSED

The technology disclosed relates to end-to-end neural networks configured for autonomous and semi-autonomous driving. In particular, the technology disclosed relates to a scalable method and apparatus for training and validating an end-to-end network configured for autonomous and semi-autonomous driving.

### BACKGROUND

The subject matter discussed in this section should not be assumed to be prior art merely as a result of its mention in this section. Similarly, a problem mentioned in this section or associated with the subject matter provided as background should not be assumed to have been previously recognized in the prior art. The subject matter in this section merely represents different approaches, which in and of themselves can also correspond to implementations of the technology disclosed.

Autonomous driving technology, appealing for its benefits in driver satisfaction and safety, is already evident in semi-automated advanced driver assistance systems (ADAS) for tasks like lane changing, speed control, and parking. These advancements not only enhance driver convenience and comfort but also hold promise for public safety, infrastructure, and vehicle durability by reducing accidents. Additionally, autonomous driving technology extends to various robotic applications such as space probes, industrial robots, military drones, and delivery robots, addressing concerns in efficiency, cost, quality, and environmental impact. For example, the E-commerce industry can benefit from the use of autonomous delivery robots that improve upon efficiency, cost, quality, and environmental impacts of traditional delivery methods.

Despite the decades of research on autonomous vehicle development, fully autonomous vehicles are not yet available for individual use on the market. Waymo has made progress on its autonomous fleet, but only for taxi service, so far. Although progress is substantial, safety and reliability are still lacking. Traditional autonomous driving systems, characterized by an aggregation of independent submodules, are challenging to optimize due to the enormous volume of data necessary to train these models. Furthermore, the manual labelling of this data necessary for the artificial intelligence systems configured for traditional autonomous driving is expensive. Many data formats required by traditional autonomous driving systems, such as pre-built maps, are not only expensive to construct and label, but pose risks to safety and generalizability due to the limited capacity to react in situations where the real-world environment does not correlate to the map as expected. The drawbacks associated with traditional methods have created an opportunity for development of an end-to-end (E2E) learning approach for autonomous driving. E2E autonomous driving typically consists of a single, self-contained deep learning model that maps sensory input, such as image frames from a camera or maps generated by light detection and ranging (LiDAR), to steering wheel and accelerator actuation for vehicle control. E2E autonomous driving systems and methods can be configured to learn via reinforcement learning approaches, such as imitation learning, rather than depending on an aggregation of manually designed tasks. Successful training of an E2E autonomous driving approach using imitation learning must be capable of overcoming certain challenges such as the varying quality of human agent driving actions, the difficult of validating and testing the E2E model, scalability, and achievement of regulatory safety standards.

Despite regulatory hurdles, supply chain feasibility, and consumer skepticism of fully autonomous driving, development of improved semi-autonomous ADAS technology is ongoing. The advantages of E2E autonomous driving approaches are readily translatable to semiautonomous driving approaches. It is accordingly desirable to employ ADAS technology that is compatible with increasing automation of driving tasks without extensive changes to hardware or software components. An opportunity arises for collision avoidance systems (CAS) and other ADAS features that leverage an E2E neural network configured for autonomous driving tasks.

Relevant prior art is:
US 10 442 443 B1

### SUMMARY

The technology disclosed involves a system and methods for providing driver assistance alerts to a driver. The technology disclosed can include receiving environmental data for a sequence of driving states including at least video from a camera, returns from an optical sensor, and location data from a GNSS receiver. The camera, the optical sensor, and the GNSS receiver are coupled to a processor carried by a vehicle. The technology includes processing the environmental data as input to an end-to-end neural network, training an end-to-end neural network to generate prescriptive steering and speed control actions in response to a present driving state. It can extend to analyzing hidden layer data and output data from the end-to-end neural network to estimate collision avoidance data. This real time collision avoidance data includes, at least, one or more detected objects within the video from the camera, a directional cue, and a risk metric based at least in part on dissimilarity between the generated prescriptive steering and speed control actions and received driver steering and speed control actions. The directional cue can be projected onto a heads-up display. Other driver assistance alerts also can be generated in real time based on the collision avoidance data.

Particular aspects of the technology disclosed are described in the claims, specification and drawings. The invention is defined in the appended claims.

### BRIEF DESCRIPTION OF THE DRAWINGS

The included drawings are for illustrative purposes and serve only to provide examples of possible structures and process operations for one or more implementations of this disclosure. These drawings in no way limit any changes in form and detail that may be made by one skilled in the art without departing from the scope of this disclosure. A more complete understanding of the subject matter may be derived by referring to the detailed description and claims when considered in conjunction with the following figures, wherein like reference numbers refer to similar elements throughout the figures.
**FIG. 1** is an architectural-level schematic of an end-to-end conditional imitation learning model for autonomous driving.
**FIG. 2** illustrates an example of a plurality of possible driving states within a trajectory, in accordance with certain implementations of the present disclosure.
**FIG. 3** is an architectural-level schematic of an end-to-end conditional learning model for autonomous driving comprising a memory-augmented transformer, in accordance with certain implementations of the present disclosure.
**FIG. 4** is a flow chart describing a process for determining when to engage autonomous control of a vehicle in response to a high-risk driving scenario.
**FIG. 5** is a schematic diagram showing the generation of collision avoidance data from the prescriptive outputs of an end-to-end autonomous driving model, in accordance with certain implementations of the present disclosure.
**FIGs. 6A****,** **6B****,** **6C** and **6D** show a first example graphical user interface for a collision avoidance system.
**FIGs. 7A****,** **7B****,** **7C** and **7D** show a second example graphical user interface for a collision avoidance system.
**FIG. 8** illustrates a computer system that can be used to implement the technology disclosed, in accordance with certain implementations of the present disclosure.

### DETAILED DESCRIPTION

The following detailed description is made with reference to the figures. Sample implementations are described to illustrate the technology disclosed, not to limit its scope, which is defined by the claims. Those of ordinary skill in the art will recognize a variety of equivalent variations on the description that follows.

Researchers across academia, government, and industry have long focused on developing semiautonomous and autonomous driving technology. The pursuit of machine automation traces back into pre-automobile history, evidenced by examples such as watermills, windmills, and Leonardo da Vinci's self-propelled cart. In response to the development of automobiles, fanciful notions of self-driving vehicles followed. Advancements in robotics, cameras and sensors, network infrastructures, and artificial intelligence (AI) have propelled the evolution of autonomous and semiautonomous driving technologies, including so-called advanced driver assistance systems (ADAS).

Modern vehicles frequently incorporate ADAS features like collision avoidance systems (CAS), lane keeping, and dynamic cruise control. ADAS features increase accessibility, particularly for seniors and individuals with mobility and sensory disabilities. Improvement and increased adoption of ADAS may alleviate several sources of traffic congestion, such as suboptimal driving behaviors and collisions blocking the roadway. Furthermore, ADAS technology offers a clear safety advantage. The World Health Organization estimates that approximately 1.35 million people lose their lives in automobile accidents and the U.S. National Highway Traffic Safety Administration reports that up to 94% of serious accidents are attributable to user error.

Despite the rapid advancement of ADAS, challenges persist, including scalability for the training and validation of AI-based ADAS, cost efficiency, and feasibility of implementation. Traditional ADAS features fully or partially automate driving tasks using highly specialized components working cooperatively within complex systems. AI augmented ADAS can outperform earlier practices that rely on simpler algorithms like bang-bang controllers. However, AI-based approaches require massive volumes of training data, which is expensive and timeconsuming to obtain. Many of the training techniques that show promise for improving the practicality and accuracy of ADAS remain in early-stage development, such as semantic segmentation in computer vision.

Emerging E2E learning approaches offer scalable and efficient alternatives for AI-based ADAS systems. E2E autonomous driving is understood in the art to include a singular system, such as a deep learning classifier, that is configured to automatically process sensory inputs, such as camera images, and generate actions that control vehicle actuators such as steering and acceleration/braking. For further information regarding the training and validation of E2E deep learning models configured for autonomous driving, reference can be made to the commonly owned US Patent Applications referenced above in the Related Applications section.

The proposed E2E approach to ADAS will be advantageous in its potential for seamless integration into increasingly autonomous functionality without for inconvenient and expensive updates to existing sensor hardware.

The technology disclosed provides a system and methods for providing both active and passive ADAS to drivers. An E2E driving model may be used for fully autonomous driving or, alternatively, as active, standby ADAS features. While a driver retains control of a vehicle, the E2E driving model operates in shadow mode until an imminent risk is detected. The E2E driving model automatically takes over to mitigate risk (e.g., collision avoidance).

E2E driving models may also be used for passive ADAS. Whereas active ADAS features override or correct a driver's actions, passive ADAS features can assist the driver in making safer decisions. The technology disclosed includes the presentation of driver alerts and warnings informed by the prescriptive outputs of an E2E driving model operating in shadow mode. In various implementations, one or more of the following can be communicated to the driver to help inform driving decisions: the prescriptive outputs from the E2E driving model, proximal objects detected by the E2E driving model, and/or directional cues indicating a recommended steering wheel orientation to avoid road hazards or follow an intended route. The driver alerts can include visual, auditory, and haptic alerts. Many implementations of the technology disclosed include a heads-up display that presents driver alerts without the driver needing to look away from the road. One form of display can be a heat map of objects identified as important by the E2E driving model projected onto the display. Another is directional cues for steering guidance, which can be presented on the display as dynamic "whisker" arrows representing respective current and/or recommended steering wheel orientation. An estimated risk level for the current driving actions can also be visually displayed to the driver. The passive ADAS alerts can also be used for driver feedback or driver education based on the prescriptive outputs and the driver's behavior.

### End-to-End Imitation Learning Model for Autonomous Driving

Despite the resources, funding, and public interest focused on the development of autonomous fleet vehicles, fully-autonomous driving technology is yet to exist in a format that meets safety and feasibility requirements for deployment to households. Technical advancements have resulted in a range of semi-automated driving technology achievements. These achievements possess varying accuracy and reliability, such as the safety features for lane-assist and collision-prevention systems that have become commonplace in modern vehicles and controversial semi-automated driving functions that allow a driver to partially relinquish steering and acceleration decisions to their vehicle. Autonomous driving technology still faces considerable barriers, however, in the areas of scalability and safety. As defined by the SAE, the extent of driving automation applicable to vehicles are:
Level 0 - No automation and fully-manually controlled by a human Level 1 - Vehicle features a single automated system, such as a cruise control function
Level 2 - Partial automation by advanced driver assistance systems for tasks such as steering and acceleration, wherein partially-automated tasks are fully monitored by the driver, who may intervene at any time
Level 3 - Conditional automation engaged in response to appropriate environmental factor detection, with some human override involved
Level 4 - High automation level characterized by full driving automation that a driver can still override when necessary
Level 5 - Full autonomous control of the vehicle under all conditions with zero human control involved

While rare examples exist of Level 3 and Level 4 autonomous vehicles, mainstream production for consumer use has not surpassed Level 2 at the time of this disclosure. Further advancements in safety and reliability must be demonstrated to further progress. Safety standards applied to the functionality and performance of autonomous vehicles are primarily directed by the American National Standards Institute (ANSI) and ISO standards from the International Organization for Standardization.

Evaluation of autonomous products, including vehicles, utilizes the ANSI/UL 4600 standard for safety. ANSI/UL 4600, the first widely-adopted safety standard applied towards autonomous vehicle operation, evaluates fully autonomous products operating independently of human supervision. ANSI/UL 4600 establishes broad, technology neutral guidelines for safety in terms of risk analysis, data integrity, autonomy validation, life cycle resiliency, and conformance assessment. In contrast, ISO standards such as ISO 26262, ISO 21488, and ISO/SAE 21434 define requirements specific to autonomous vehicle technology safety. ISO 26262 evaluates functional safety of electrical/electronic systems in vehicles, particularly safety management in the event of a system malfunction or failure. ISO 21488 covers the safety of the intended functionality (SOTIF), which addresses unintended behavior of systems in absence of an ISO 26262 system malfunction. ISO/SAE 21434 covers cybersecurity risk management at stages ranging from concept design, development and manufacturing processes, operation, maintenance, and decommissioning of road vehicles.

A primary obstacle blocking the satisfactory compliance of autonomous vehicles to the above-described safety standards is scaling. For an autonomous vehicle to be adequately safe, reliable, and generalizable to complex and dynamic driving landscapes, a massive volume of data is necessary. While data availability limitations are not exclusively responsible for all remaining technical gaps, data need is intimately connected to all aspects of autonomous driving system development. Areas of technology under improvement that are related to autonomous vehicles, for instance, computer vision and sensor development, are limited in their growth potential without available data to learn from that is sufficient in both magnitude and variety. Moreover, additional technical scalability dilemmas related to time, cost, and resources cannot be addressed without the information at hand to do so.

Both traditional autonomous driving technologies and end-to-end learning approaches rely heavily on artificial intelligence and deep learning systems that evaluate the environment, predict future changes to the environment, and make decisions in response to the environment. The development of robust, generalizable deep learning models capable of learning complex feature spaces and patterns is highly dependent on rich data for training, validation, fine-tuning, and further evaluation/testing processes.

The autonomous driving systems and methods described in the present disclosure address this issue using an E2E approach. The E2E architecture of the disclosed systems improves scalability by reducing the dependency on up-to-date, highly complex map data and is configured to process driving conditions not previously seen during training. Using E2E approaches is substantially more efficient in terms of data usage and computational cost, in part, due to the configuration of the deep learning model to extract useful features directly from input data and converting input data processing directly into driving actuation.

However, scalability concerns are not fully addressed by the improvements offered by implementing an E2E approach. It is still necessary to acquire enough data for both learning and validation processes that provides sufficient training for rare and difficult scenarios. Corner cases such as extreme weather, close proximity to collisions, and spontaneous road blockages by pedestrians or stray objects are rare occurrences that are difficult to obtain sufficient amounts of training data for, but these scenarios are also crucial for autonomous driving models to learn due to their significant safety risk and potential consequence if handled poorly. In addition to the obvious ethical importance, safety standards such as the SOTIF guidelines within ISO 21448 substantially focus on the evaluation of risk level in response to hazardous events.

In contrast to corner cases, which generally refer to rare and potentially hazardous driving scenarios, care must also be taken to ensure that a model is sufficiently capable of handling edge cases. Edge cases, although frequently overlapping with corner cases, address conditions that may introduce unique challenges to computational systems as compared to human drivers. Autonomous vehicles may respond poorly to edge cases, for example, due to limitations in computer vision technology or highly-individualized scenarios. While situations like heavy rain or a busy elementary school child pick-up lane can often be stressful or challenging for a human driver, the complexity is intensified for an autonomous driving model that may not be able to generalize from simple driving to routinely encountered stressful situations

The difficulty of training an autonomous driving model that is not only familiar with an adequately diverse range of driving scenarios, but also generalizable to scenarios that are unfamiliar, can be addressed using reinforcement learning and imitation learning approaches. By leveraging driving demonstrations performed by human drivers, it is possible to train an autonomous driving model, like the E2E system disclosed herein, to learn feature distributions, feature patterns, and overall behavioral policy, therefore enabling the model to process driving scenarios and determine a plan of best action in response to input data from the environment that does not depend on previous exposure specific to the scenario, location, or route.

Further detail on how the disclosed systems and methods can provide a solution to scalability and performance challenges by combining the advantages of E2E learning and imitation learning strategies with additional deep learning methodology that enables contextaware learning and scalable approaches for data collection, training, and validation, reference can be made to the commonly owned US Patent Applications listed above under Related Applications. Next, the architecture of the disclosed E2E model is discussed in further detail.

### System Architecture

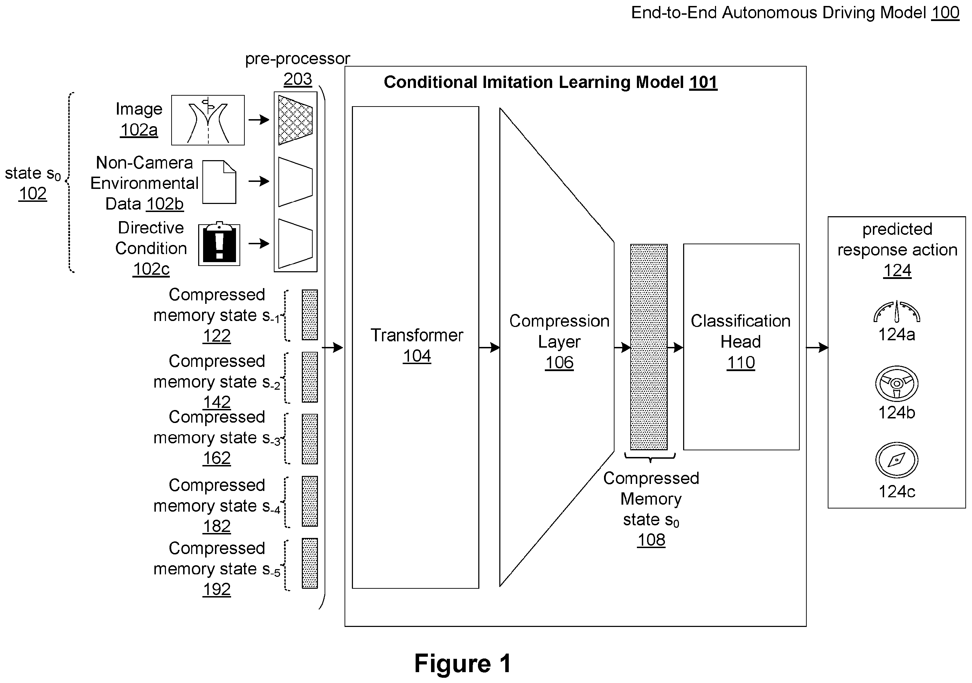

**FIG. 1** is an architectural-level schematic **100** of an end-to-end conditional imitation learning model **101** for autonomous driving. Conditional imitation learning model **101** is illustrated within schematic **100** in accordance with one exemplary implementation of the technology disclosed comprising a transformer architecture. At a high level, the conditional imitation learning model **101** processes environmental data corresponding to a state *s*₀ **102** within a driving environment to prescribe an appropriate response action **124.** The prescriptive response action can include actuation of the steering wheel and accelerator/brakes that change the speed **124a,** orientation **124b,** and thus, location **124c** of the vehicle.

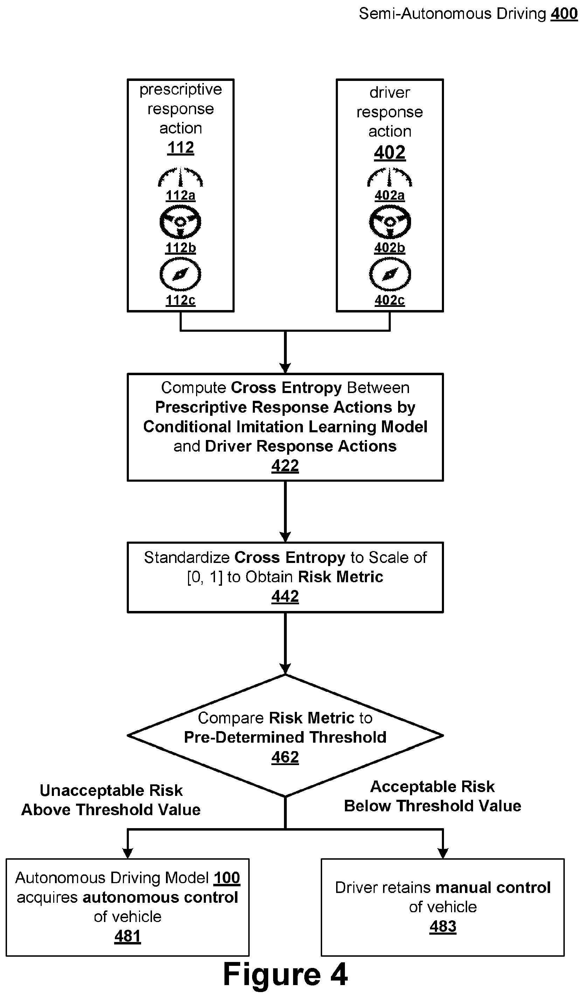

In a fully autonomous driving mode, the prescriptive response action **124** is executed via operation of one or more actuators controlling a vehicle. In a semi-autonomous mode, the conditional imitation learning model **101** is operating in a so-called "shadow mode". A human driver manually operates the vehicle while conditional imitation learning model **101** is operating in the background and generating outputs without actuation of the brakes, steering wheel, etc. as directed by the prescriptive response action **124.** The prescriptive response action **124** is used to inform one or more ADAS functionalities of the vehicle. For example, a passive ADAS tool may leverage the conditional imitation learning model **101** for CAS purposes by alerting the driver to brake when the prescriptive response action **124** calls for brake actuation, thereby mitigating the risk of an imminent collision with another object. An active ADAS tool may leverage the conditional imitation learning model **101** for CAS purposes by executing autonomous braking when the prescriptive response action **124.** This brake actuation mitigates the risk of an imminent collision with another object. The use of conditional imitation learning model **101** for collision avoidance is expanded upon further with reference to **FIG. 4****.** The input data and architecture of conditional imitation learning model **101** will now be described in further detail.

Input state *s*₀ **102** is represented by observations including an image **102a** and a plurality of non-camera environmental data **202b** (*e.g*., LiDAR and GNSS data). In addition to the observations describing state s₀ **102,** a directive condition **102c** *(e.g.,* a GPS-direction guiding a vehicle along an intended route) is also provided in certain implementations. Hence, conditional imitation learning model **101** predicts an action (e.g., braking) in response to a state (e.g., rapidly approaching the rear of another vehicle). In another implementation, the conditional imitation learning model **101** predicts an action (e.g., steering the vehicle to the right) in response to a state (e.g., approaching an intersection with another perpendicular street) including a directive condition (e.g., a route directive to turn right onto the perpendicular street to stay on the navigation route). A conditional route may refer to a route directing the vehicle to a specific target end location, or a shorter-term conditional route such as the next three, five, or ten seconds of the driving routes. In some implementations, the route is based on a static target end location. In other implementations, the target end location may be dynamic and shift in response to previous route progress.

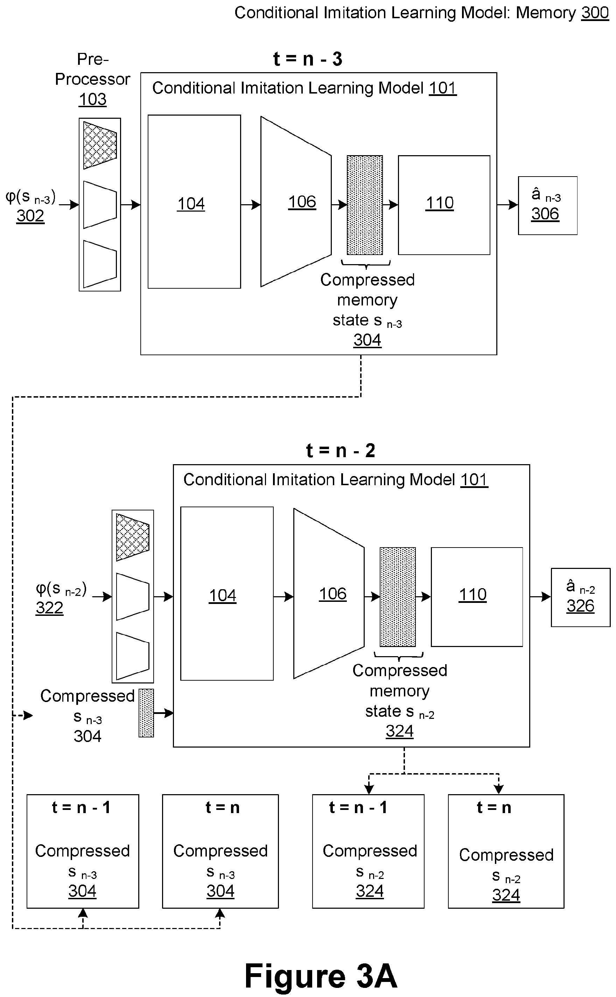

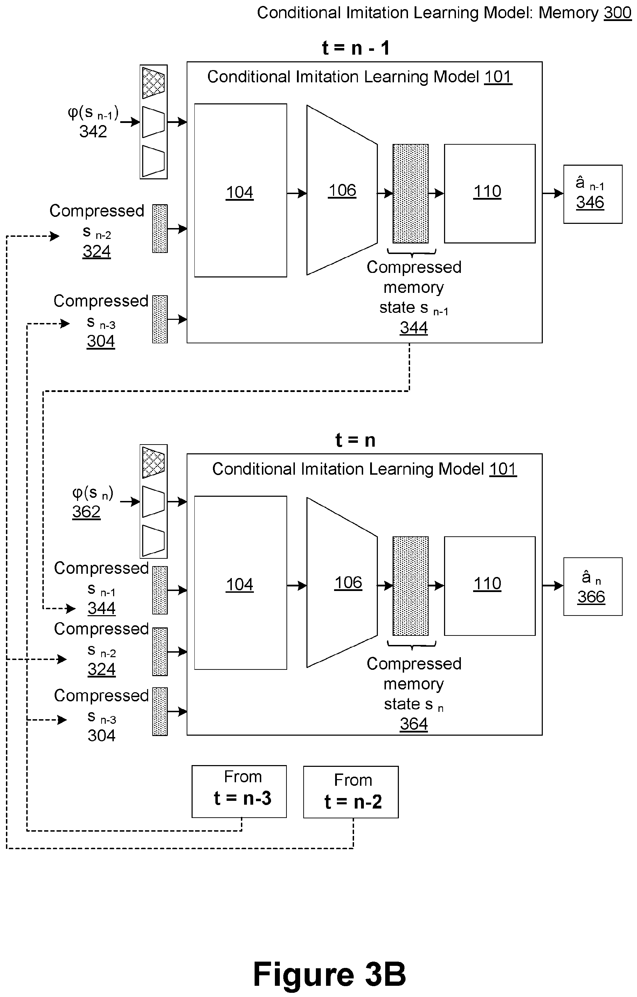

In addition to the data corresponding to the present state *s*₀ **102,** memory data in a compressed format is extracted from storage in a frame buffer containing information corresponding to a number of prior states in the given trajectory. For simplicity and clarity, schematic **100** illustrates a total of five previous memory frames - compressed memory state *s*₋₁**122**, compressed memory state *s*₋₂**142**, compressed memory state *s*₋₃**162**, compressed memory state *s*₋₄ **182,** and compressed memory state *s*₋₅ **192.** However, in many implementations of the technology, more than five previous memory frames are stored in the frame buffer for use as input to the present state such as ten, fifteen, twenty or a larger number of previous memory frames. These memory frames may cover two, three, five or more seconds of history at frame rate lower than standard video capture. A memory frame refers to a "snapshot" or latent representation of previous states processed by conditional imitation learning model **101.** The generation and storage of compressed memory states into the frame buffer is elaborated upon further later in the discussion of the transformer architecture with respect to **FIG. 3****.** As previously described, the segmentation of driving state data into states within a trajectory is variable. In certain implementations of the technology disclosed, the number of states corresponds to at least three seconds of history preceding the present state *s*₀ **102.**

Prior to the second processing stage performed by conditional imitation learning model **101,** observation data for state *s*₀ **102** undergoes pre-processing in a first stage processor stage by pre-processor module **103.** Pre-processor **103** embeds the respective input data from image **102a,** non-camera environmental data **102b,** and directive condition **102c.** In some implementations, image **102a** undergoes image processing that is unique to the deep learning analysis of image data, as indicated by the hashed-line shading of the unit within pre-processor **103** adjacent to image **102a.** In certain implementations, this image processing is performed by a convolutional neural network. In one implementation, the processing model responsible for pre-processing data contained in image **102a** is a pre-trained module that has been transferred or fine-tuned for use in conjunction with conditional imitation learning model **101.** In some implementations, the pre-processing of image **102a,** or other spatial mapping data (e.g., LiDAR data), involves generation of positional embeddings that maintains the integrity of the location information corresponding to the data. In one implementation, the positional embedding data can later be used to construct a heat map, like an attention map using the attention weights from conditional imitation learning model **101,** for object detection purposes to inform CAS operations. For example, using positional embeddings from image data **102a** and attention weights from transformer **104** to construct an attention map can enable the detection of a region within the camera view that was considered important by conditional imitation learning model **101** in generating a prescriptive output action **124** including brake actuation. When the attention map is projected back onto the image data **102a,** the important region could overlap with a pedestrian walking in a crosswalk or another vehicle ahead. Terms relating to the "importance" of an input feature or token or the "attention" towards that input feature or token are terms of art that will be readily recognized by a skilled user.

After pre-processing, the processing stack, comprising conditional imitation learning model **101,** processes the embedded outputs from pre-processor **103** along with the compressed memory states **122, 142, 162, 182,** and **192** using a transformer **104** and compression layer **106.** The compression layer **106** of the illustrated processing stack produces the memory frame for input state *s*₀ **102.** In other words, the output of compression layer **106** is a compressed memory state **108** of input state *s*₀**102**. Compressed memory state ***s*₀108** will be stored within the frame buffer using a FIFO (first in, first out) storage process such that at the time of processing a state *s*₁, the frame buffer will include compressed memory representations **108, 122, 142, 162,** and **182** respective to states *s*₀, *s*₋₁, *s*₋₂, *s*₋₃, and *s*₋₄.

To generate the predicted response action **124** in response to input state *s*₀ **102,** compressed memory state ***s*₀108** is processed in the third stage processor by a classification head **110** to generate the prescriptive response action **124.** Specifically, the compressed memory states₀**108** is processed to produce actuation of the steering wheel and accelerator/brakes that can change the speed **124a,** orientation **124b,** and thus, location **124c** of the vehicle.

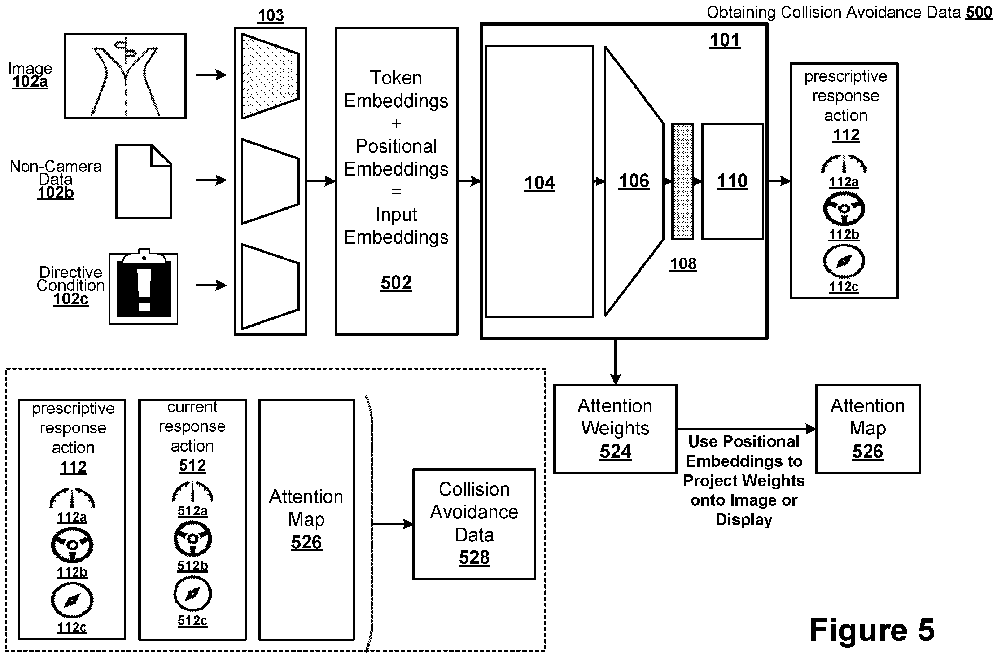

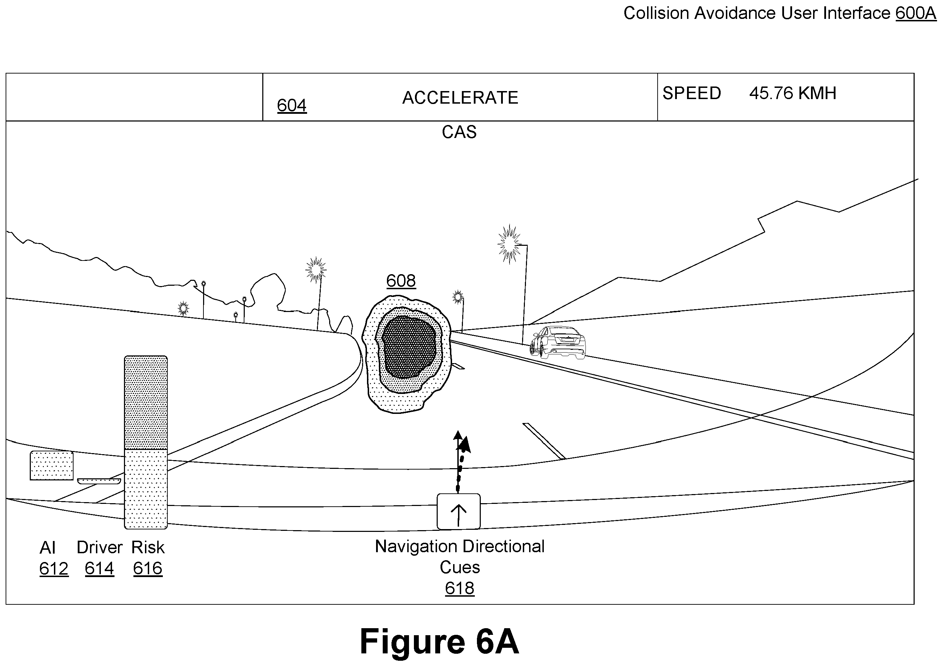

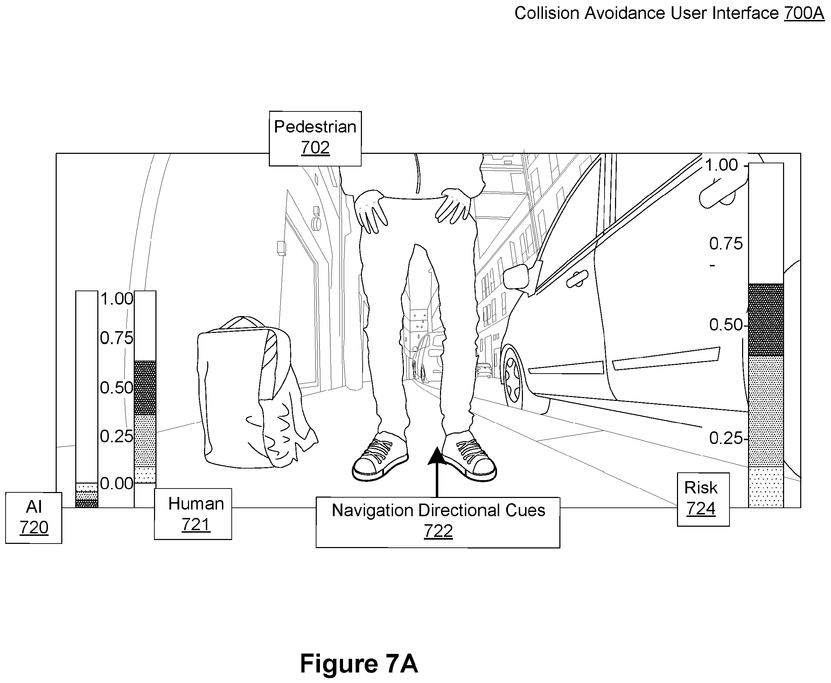

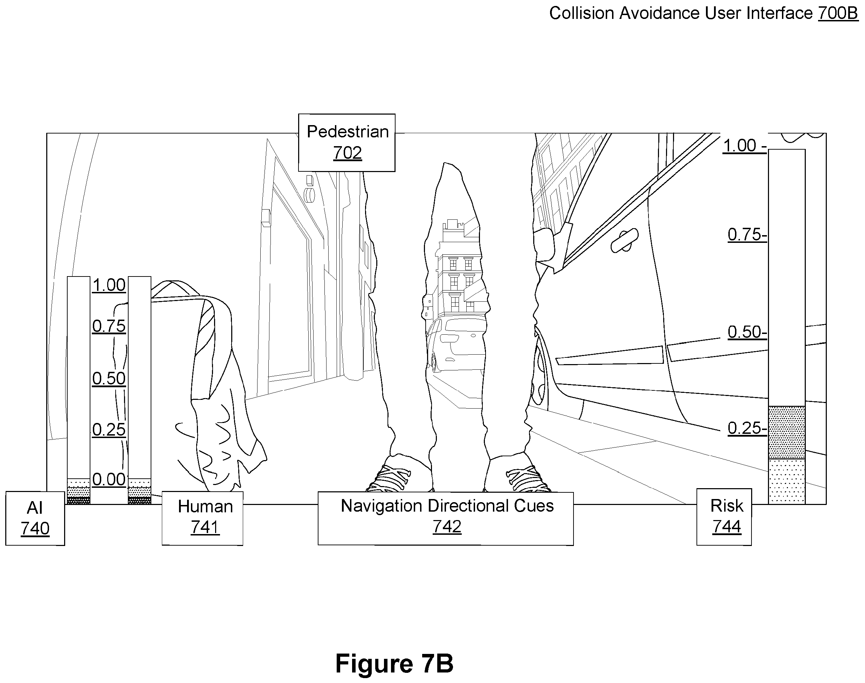

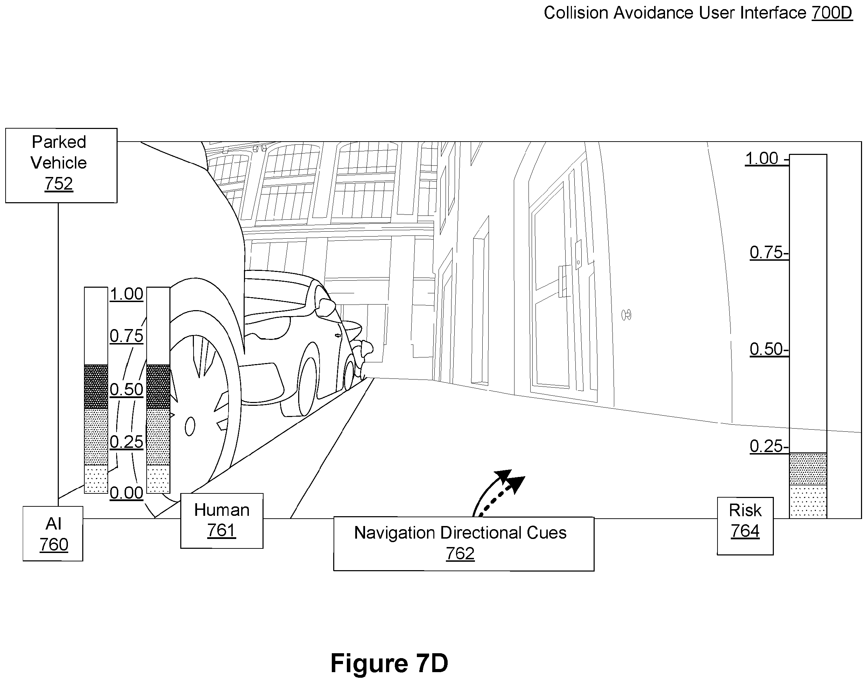

The conditional imitation learning model **101** is an end-to-end autonomous driving model that can be employed for total automation of vehicle operation by executing prescriptive response action(s) **124.** Additionally, driving automation by conditional imitation learning model **101** can be translated into partial automation of vehicle operation, e.g., Level 2 or Level 3 automation tasks. As introduced above, conditional imitation learning model **101** can operate within a shadow mode. When conditional imitation learning model **101** operates within a shadow mode, the prescriptive response action **124** is made available for ADAS use. In passive ADAS, driver assistance alerts and warnings can be generated based on the prescriptive response action **124.** In active ADAS, task automation can involve executing prescriptive response action **124.** In one implementation, prescriptive response action **124** is processed to compute a risk level associated with a current driving state to inform the decision of whether manual or autonomous driving is more appropriate. Various implementations involving passive ADAS, active ADAS, and risk calculation are expanded upon further with reference to **FIGs. 4** and **5****,** and example use cases are presented in **FIGs. 6A-D** and **7A-D.**

To establish a foundation in accordance with certain implementations of the system and methods disclosed herein, a deep learning framework will now be described in further detail. The disclosed conditional imitation learning model **101** is an end-to-end autonomous driving model using imitation learning and memory augmentation techniques to mimic the driving behavior of a skilled, safe human driver. Imitation learning and memory augmentation will be briefly introduced below. For an in-depth description of the systems and methods used for scalable training and validation of an end-to-end autonomous driving model, such as conditional imitation learning model, reference can be made to commonly owned US Patent Applications referenced in the Related Applications section, above.

First, a high-level introduction is provided for imitation learning concepts relating to state-action pairs within a driving trajectory and driving behavioral policies learned from driving trajectories. Next, the discussion turns to the disclosed memory-augmented transformer. A memory-augmented transformer enables generation of a prescriptive action in response to a state including the processing of previous states in the trajectory, in contrast to the processing of instantaneous state data lacking information from the recent past that provides useful context for driving decisions.

### Imitation Learning for Autonomous Driving

Conditional imitation learning model **101** is trained using a large database of driving demonstrations in order to estimate a driving behavioral policy. A driving demonstration can include one or more driving tasks such as lane merging, handling a four-way stop, and sudden braking in response to an imminent collision risk. The driving tasks within a driving demonstration may be performed within a variety of environmental conditions, including varying times of day, weather conditions, types of roads and highways, and degrees of traffic. Driving demonstrations may be collected from a fleet of vehicles operated manually by human drivers, autonomous vehicles, or driving simulation. Driving demonstrations are explained in further detail with reference to **FIG. 3** below the subsequent discussion of model training approaches of an imitation learning model for autonomous driving.

Conditional imitation learning model **101** learns, from the training driving demonstrations, a driving behavioral policy. The driving behavioral policy is a probability distribution over actions given states, also referred to as a mapping of states to actions. A driving behavioral policy imitates the subjective rules and logic that a human applies to driving. A trained imitation learning model uses the estimated behavioral policy, embodied in model coefficients, to compute a prescribed action, such as braking, in response to a state, such as a red light in video input. An imitation estimation of such a policy from a large training data set (e.g., hundreds of thousands or millions of examples) inevitably performs better than a list of driving rules would. Moreover, a list of driving rules that would be sufficiently comprehensive would need to be infeasibly long and complex. In contrast, estimation of a behavioral policy using an imitation learning model is better equipped to extract such complexities from driving demonstration examples.

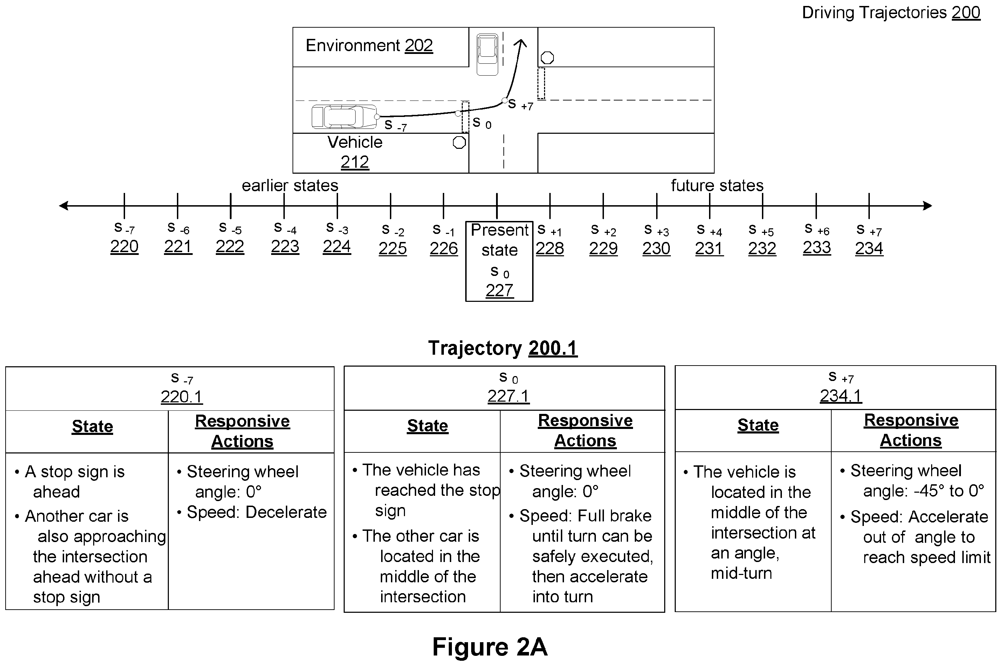

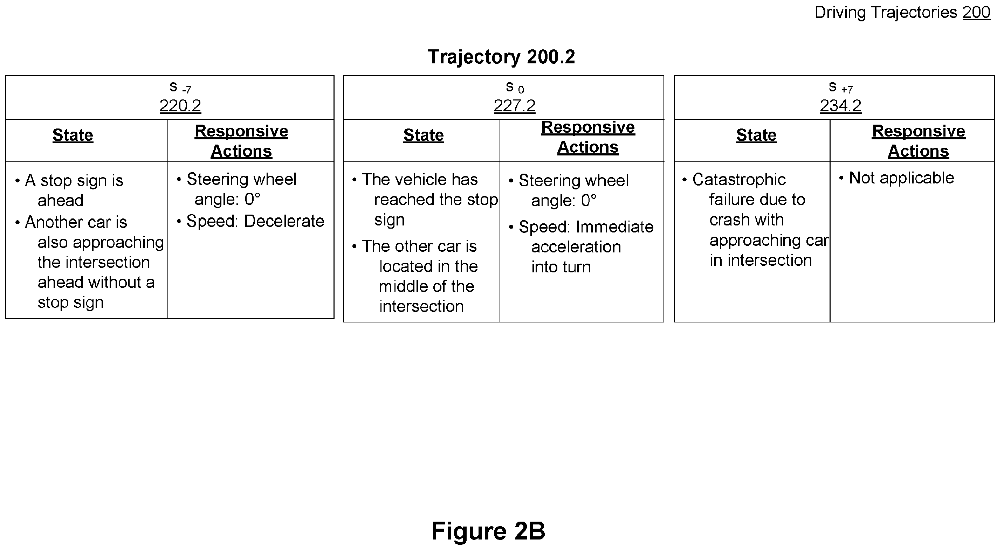

A well-trained imitation learning model trained on a large number of driving demonstrations is generalizable to a broad range of driving states and environmental stimuli, both seen and unseen to the model during training, because the model has learned an underlying rationale for driving decisions rather than memorizing specific actions to perform in response to specific states. The disclosed conditional imitation learning model **101,** as implied by the title, is trained to predict an action in response to a state, based on a condition restricting the vehicle's driving trajectory. For example, an autonomous vehicle may need to turn left at an intersection in order to stay on an intended route (the condition restricting the vehicle's driving trajectory). According to the learned behavioral policy estimated by the trained conditional imitation learning model **101,** the autonomous vehicle knows to yield to oncoming traffic before executing the left turn. Furthermore, if the road conditions are icy at the time, the autonomous vehicle will adjust rates of deceleration and acceleration during the turn accordingly, as informed by the learned behavioral policy. Terminology like "action", "state", "trajectory", and "environment" will be used herein according to their meaning as understood within the field of conditional imitation learning in contrast to other common meanings. The description with reference to FIG. 2 below further elaborates on conditional imitation learning terminology.

**FIG. 2** illustrates an example **200** of a plurality of possible driving states within a trajectory, in accordance with certain implementations of the present disclosure. Example **200** occurs within the context of a driving environment **202.** The driving environment **202** includes a particular layout of roadways with various orientations and relevant legal guidelines for use of the roadways, structures and objects surrounding the roadways, weather and atmospheric conditions, other vehicles, pedestrians, and a vehicle **212.** A user skilled in the art will recognize that a driving trajectory, or simply trajectory, refers to the driving route of vehicle **212.** A large, near infinite number of possible trajectories exist within environment **202** equivalent to the total combination and permutation of possible routes that can be taken within the environment, each of which has the potential to be very long. The actualized trajectory taken by vehicle **212** can be described by a sequence of states, represented by the illustrated number line.

The illustrated number line centers on a present state s₀ **227.** Present state *s*₀ **227** was preceded by a sequence of earlier states including state *s*₋₁ **226,** state *s*₋₂, **225,** state*s*₋₃ 224, state *s*_{*-*4}.**223,** state *s*₋₅ **222,** state *s*₋₆ **221**, and state *s*₋₇ **220.** Present state *s*₀ **227** will be succeeded by a sequence of future states including state *s*₊₁ **228,** state *s*₊₂ **229,** state *s*₊₃ **230,** state *s*₊₄ **231,** state *s*₊₅ **232,** state *s*₊₆ **233,** and state *s*₊₇ **234.** The trajectory of vehicle **212** is also illustrated within the schematic of environment **202** by the grey, dashed arrow indicating that vehicle **212** indicates to turn left at the approaching intersection. As shown within the schematic of environment **202,** vehicle **212** is approaching a stop sign at state *s*₋₇ **220** and reaches the stop sign at the present state *s*₀ **227.** If the future states are carried out as intended, vehicle will be mid-execution of a left turn and positioned in the middle of the illustrated intersection at state *s*₊₇ **234.**

While vehicle **212** encounters a stop sign at the present state *s*₀ **227,** vehicles traveling across the illustrated intersection along the cross-street do not have a stop sign and may drive straight through. As a result, vehicle **212** is expected to abide by the stop sign and reach a complete stop at the present state *s*₀ **227,** yield to crossing vehicles and remain fully stopped at the stop sign until there is sufficient clearance to safely initiate the left turn to avoid a collision with a crossing vehicle.

Two trajectories are described within example **200,** trajectory **200.1** and trajectory **200.2.** Trajectory **200.1** is described with reference to three representative driving states within the trajectory, including earlier state *s*₋₇ **220.1,** the present state *s*₀ **227.1,** and a future state *s*₄₊₇**234.1.** Within each driving trajectory, each state *sₙ,* occurring at a time *tₙ,* can be described by a plurality of features associated with the vehicle and/or the surrounding driving environment at time *tₙ.* This data is collected by hardware coupled to the vehicle, such as one or more cameras and/or LiDAR sensors. For example, at state *s*₋₇ **220.1,** sensors coupled to vehicle **212** record environmental data within environment **202,** such as the stop sign ahead and another vehicle approaching the intersection via the cross-street.

A responsive action *aₙ* can be executed in response to each state *sₙ*. In response to state *s*₋₇ **220.1,** the operator does not execute any actions that change the steering wheel angle from the neutral position of 0° but braking is engaged in order to comply appropriately with the stop sign. For convenience and clarity, steering wheel orientation will be described in reference to angular measurements where 0° indicates that the vehicle is driving straight ahead, positive angles like +45° indicate steering towards the right, and negative angles like -45° indicate steering towards the left. In certain implementations, training data will further include information about the operator's eye movements using retinal tracking data.

At the present state *s*₀ **227.1** of trajectory **200.1,** vehicle **212** has approached the boundary indicating the appropriate position to stop in compliance with the stop sign. At state s₋₀ **227.1,** the sensors coupled to vehicle **212** indicate that the vehicle has reached the stop sign and the crossing vehicle is now directly in front of vehicle **212** as it crosses the intersection along the cross street. As a result, the operator of vehicle **212** the operator does not execute any actions to change the speed or steering orientation of the vehicle. When vehicle **212** reaches future state *s*₊₇ **234.1,** the sensors coupled to vehicle **212** indicate that the vehicle is now located within the intersection while executing its turn. In response to state *s₊₇* **234.1,** the operator executes action *a₊₇* including turning the steering wheel to the left at an appropriate angle, such as -45°, and acceleration out of the turn to return to the normal speed limit once vehicle **212** completes its turn.

Driving trajectory **200.1** represents a safe series of state-action pairs that is appropriate for the given driving task, but many other trajectories are possible within environment **202.** Furthermore, trajectories are not pre-destined. As a first state *sₜ* transitions into a new state *s*_{*t*+1}, there exists a set of the total number of actions possible in response to state *s*_{*t+*1}. The selection of an action is a variable in the determination of the state transition and resulting state *s*_{*t+*2}. Many implementations of the technology disclosed include using an estimated behavioral policy learned by conditional imitation learning model **101** to generate a prescribed action in response to a state, and execution of the prescribed action will naturally influence the characteristics of subsequent states. Accordingly, two different trajectories are not guaranteed to continue overlapping solely because they began with overlapping states and actions. As an extension, it is possible for trajectories to converge or diverge from one another at any state or any point in time. To aid in illustrating transitions from one driving state to the next, as well as the relationship between an executed action and the resulting state transition, a second trajectory **200.2** is also provided in example **200.**

Trajectory **200.2** represents a unsafe, catastrophic series of state-action pairs. It is described with reference to three representative driving states within the trajectory, including earlier state *s*₋₇ **220.2,** the present state *s*₀ **227.2,** and a future state *s*₊₇**234.1.** At state *s*₋₇ **220.2,** the state and action are the same as those within state *s*₋₇ **220.1** in trajectory **200.1,** so the details will not be stated redundantly here. However, trajectory **200.2** diverges from trajectory **200.1** at state *s*₀ **227.2.** The operator does not comply with the stop sign at state *s*₀ **227.2** and does not wait for the crossing vehicle to safely clear the intersection prior to executing their turn. Instead, the executed action by the operator in response to state *s*₀ **327.2** includes initiating the left turn without stopping.

Consequently, the vehicle **212** collides with the crossing vehicle within the intersection at some point following state *s*₀ **227.2,** resulting in catastrophic failure that prematurely ends the trajectory. Because the trajectory ended at the collision incident, trajectory **200.2** will not reach a future state *s*₊₇ **234.2.**

Actions resulting in catastrophic failure are not the only cause of divergence between different trajectories. Within example **200,** both trajectories share the same intended route, driving task, and share the same goal, and differ only in their quality and success of execution. Two previously overlapping driving trajectories may diverge at a driving state where one driver turns left and the other turns right.

In one implementation of the technology disclosed, conditional imitation learning model **101** may be trained to clone the behavior of the operator within trajectory **200.1** with the goal of successfully emulating the safe driving techniques demonstrated by the operator of vehicle **212.** In another implementation, conditional imitation learning model **101** is trained with reinforcement learning methods using trajectory **200.1** as a positive example, wherein similarity to the actions within trajectory **300.1** is rewarded, and using trajectory **200.2** as a negative example, wherein similarity to the actions within trajectory **200.1** is penalized. Other alternative training approaches can also lead to conditional imitation learning model **101** successfully learning the turning safety behavior demonstrated by example **200.**

Conditional imitation learning model **101** is trained on driving demonstrations, like the trajectories shown in example **200** as well as more complex scenarios, to learn a behavioral policy that can be applied to environmental data **102a, 102b** and condition **102c** corresponding to a present driving state *s*₀ **102** and generate a prescriptive response action *a*₀ **124,** at which point the trajectory transitions to a subsequent driving state *s*₁.

Given the influential and lasting effects previous states and actions have on the future state of a trajectory, there is considerable benefit to modeling the local and global dependencies between trajectory states when predicting driving behaviors. Hence, autonomous driving models are at a disadvantage if they are not able to store any previous information in a memory cache or retrieve that information for contextually-aware decision making. Deep learning architectures configured to achieve memory-informed prediction, such as recursive neural networks or multiheaded attention mechanisms for transformer models, are frequently computationally expensive. Given the complexity of autonomous driving problems, recursive neural networks or multiheaded transformers are likely to operate slower than desired. In some implementations of the technology disclosed, the complexity of the specific learning problem and/or the computational processing power available warrants the use of these models. However, in most cases, the associated time, monetary, and computing costs of these models can be quite prohibitive and may affect the capacity of the model to achieve safety standards, such as the SOTIF guidelines set forth in ISO standard 21448 as previously described.

The discussion now turns to the introduction of a memory-augmented transformer that leverages input augmentation with memory cached data to enable the use of local and global dependency patterns within driving trajectories with improved efficiency as compared to traditional recursive neural network or transformer models.

### Memory-Augmented Transformer

**FIG. 3** is an architectural-level schematic **300** of an end-to-end conditional learning model **101** for autonomous driving comprising a memory-augmented transformer, in accordance with certain implementations of the present disclosure. Schematic **300** is equivalent to schematic **100,** wherein the processing of four separate time steps is illustrated in a so-called unrolled state. In contrast to a multi-head transformer model that is configured to repetitively process large quantities of input data corresponding to a plurality of sequential states within a trajectory, the memory-augmented transformer illustrated within schematic **300** utilizes a first-in, first-out frame buffer that stores a cached memory state of previously processed states in the trajectory. Each frame, or memory state, within the frame buffer contains the compressed latent space representation of a respective earlier state generated by compression layer **106** of schematic **100.** Given that the processing of a particular state *sₜ* by compression layer **106** to receive a corresponding compressed representation of state *sₜ* includes the processing of the *n* frames within the frame buffer for the earlier states {*s*_{*t-*1}, ... , *s*_{*t-*n}}, assuming a constant frame buffer size, the predicted action *âₜ* in response to *sₜ* is generated in response to compressed data representing the earlier states {*s*_{*t*-1}, ... , *s*_{*t*-2*n*}}.

Schematic **300** begins with the processing of data at a timepoint *t* = *n* - 3 and ends with the processing of a timepoint *t* = *n.* A set of observations for a state *s*_{*n*-3}, *φ*(*s*_{*n*-3}) 302, is assumed to be the earliest state to the processed in the trajectory, hence no frames are current stored within the frame buffer for timepoint *t* = *n* - 3. Pre-processor **103** embeds data from *φ*(s_{*n-*3}) **302,** followed by processing by transformer **104** and the generation of a compressed memory state representation **304** of state *s*_{*n*-3} by compressor **106.** The compressed memory state representation **304** of state *s*_{*n*-3} is processed by the classification head **110** to generate a predicted action *â*ₙ₋₃**306.**

For timepoint *t* = *n* - 2, the pre-processor **103** embeds data from *φ*(*s*_{*n-*2}) **322.** In addition to the embedded data from state *s*_{*n-*2}*,* the frame buffer now stores a frame for the compressed memory state **304** of state *s*_{*n-*3}. These combined inputs are processed by transformer **104** followed by compressor **106** for the generation of a compressed memory state representation **324** of state *s*_{*n*-2}. The compressed memory state representation **324** of state *s*_{*n-*2} is processed by the classification head **110** to generate a predicted action *â*_{*n*-2}**326**.

For timepoint *t = n* - 1, the pre-processor **103** embeds data from *φ*(*s*_{*n-*1}) **342.** In addition to the embedded data from state *s*_{*n-*1}, the frame buffer now stores a respective frame for both the compressed memory state **304** of state *s*_{*n*-3} and the compressed memory state representation **324** of state *s*_{*n*-2}*.* These combined inputs are processed by transformer **104** followed by compressor 106 for the generation of a compressed memory state representation **344** of state *s*_{*n-*1}. The compressed memory state representation **344** of state *s*_{*n-*1} is processed by the classification head **110** to generate a predicted action *â*_{*n*-1}**346**.

For timepoint *t* = *n,* the pre-processor **103** embeds data from *φ*(*sₙ*) **362.** In addition to the embedded data from state *sₙ,* the frame buffer now stores a respective frame for the compressed memory state **304** of state *s*_{*n*-3}, the compressed memory state representation **324** of state *s*_{*n*-2}, and the compressed memory state representation **344** of state *s*_{*n-*1}*.* These combined inputs are processed by transformer **104** followed by compressor **106** for the generation of a compressed memory state representation **364** of state *sₙ.* The compressed memory state representation **364** of state *sₙ* is processed by the classification head **110** to generate a predicted action *âₙ***366**.

If the illustration were to show future timesteps of the memory-augmented transformer model, the frame buffer would eventually reach capacity and begin losing the oldest frame, one at a time per timestep, to make room for the storage of the most recent frame.

The prescriptive actions generated by conditional imitation learning model **101** are executed for controlling an autonomous vehicle. For a partially autonomous vehicle, conditional imitation learning model **101** may be operating in a shadow mode. While operating in shadow mode, the processes described with reference to **FIGs. 1** and **3** are still performed, but the prescribed actions generated by the model are not automatically executed by the actuators of the vehicle. Instead, a human driver can retain manual control of the vehicle while the modelgenerated outputs are leveraged by ADAS to provide driver alerts.

### Advanced Driver Assistance Systems with End-to-End AI

The disclosed conditional imitation learning model **101** may be used to implement additional advanced driver assistance systems within an autonomous or semi-autonomous vehicle. In certain implementations, an advanced driver assistance system configured to act as a collision avoidance system can be designed to emit a warning signal (an audible and/or visual notification) to a human agent operating a vehicle in response to a predicted dangerous driving state being detected. In one implementation, the detection of a potential danger by the conditional imitation learning model **101** (or a separate trained model that is associated with conditional imitation learning model **101)** is performed in response to an interaction with the accelerator/brake actuator(s) that deviates from a prescribed speed. In another implementation, the detection of a potential danger by the conditional imitation learning model **101** (or a separate trained model that is associated with conditional imitation learning model **101)** is performed in response to the processing of a feature of one or more driving states, such as an object detected in close-proximity or rapidly-approaching proximity to the vehicle, a changing traffic signal, or a lane deviation.

In some implementations, the advanced driver assistance systems configured via data collection, learning, and statistical analyses performed in association with the methods and systems disclosed herein may be implemented within a semi-autonomous vehicle to instigate the transition of manual control to autonomous control or vice-versa. In one example, an advanced driver assistance system, such a CAS response, may be configured to respond to a predicted collision *(i.e.,* in response to an object in close proximity to the vehicle or a lack of response from an operator to a traffic signal) by overriding manual control of the vehicle and initiating automated breaking. In another example, a so-called "adaptive cruise control" system may be configured to respond to a vehicle exceeding a pre-defined allowable threshold for object proximity (*e.g*., a pre-defined distance allowed between the operator's vehicle and a separate vehicle directly in front of the operator's vehicle such as a minimum distance between vehicles of thirty feet, fifteen meters, or two car-lengths) or for speed (*e.g.,* a pre-defined speed limit for the vehicle such as eighty miles-per-hour, seven miles-per-hour over the presently-detected speed limit, or a ten percent increase in speed over the presently-detected speed limit).

In a third example, the advanced driver assistance system may provide a range of statistical analyses performed on the driving behavior of the vehicle, independent of the extent to which the vehicle is autonomously-operated, towards the operator regarding the current performance and behavior of the vehicle that can be useful for the operator in terms of driving behavior, safety warnings and feedback, or potentially-necessary vehicle maintenance. This data that can be provided to the vehicle operator, such as a risk metric or suggested adjustments to driving behavior, can be more informative than typical driving data presented towards an operator in thanks to the high-dimensional, high-volume data collected by the conditional imitation learning model **101.** Analyses may include data relating to how frequently the driver engages in high-risk behavior, speed and maneuverability trends (e.g., swerving, unsafe lane changes, etc.), frequency of near-collisions and/or events during which autonomous control was necessary to avoid collisions, and so on.

In the above-described example implementations, as well as a number of further scenarios to which a user skilled in the art would recognize an advanced driver assistance system could be implemented within the technology disclosed herein, an advanced driver assistance system may leverage driving demonstration data from both human agents and autonomous driving agents, as well as any associated analyses, used in training, validation, fine-tuning, or transfer learning. The advanced driver assistance system may also leverage pattern recognition and risk analysis data extracted from a trained autonomous driving model, as well as external data input by further expert feedback and/or computational analysis of data extracted from the trained autonomous driving model. Furthermore, the advanced driver assistance system may also leverage data and data analysis obtained from driving trajectories performed after initial model deployment. In operation, vehicles continue to collect and monitor data from an operator after deployment of the trained autonomous driving model. The data collected can be used both to corrective actions to the operator and to continue fine-tuning the model.

**FIG. 4** is a flow chart describing a semi-autonomous process **400** for determining when to engage autonomous control of a vehicle in response to a high-risk driving scenario. Process **400** includes the comparison of collected data from conditional imitation learning model **101** operating in a shadow mode, including the model's prescriptive response actions **112,** against manual driver response actions **402.** In this semi-autonomous driving mode, the driver manually controls the vehicle by executing driver response actions **402** including speed control **402a,** steering control **402b,** and optionally, following directions according to a navigational route **402c.** The conditional imitation learning model **101** is operating in a shadow mode such that prescriptive response actions **112** (e.g., speed control **112a,** steering control **112b,** and optionally, directions according to a navigational route **112c)** are still generated, but are not always automatically executed. Prescriptive response actions **112** are leveraged to inform advanced driver assistance systems. **FIG. 4** shows a process of active ADAS, including engaging autonomous control of the vehicle in response to risky driving behavior from the human operator. **FIG. 5** describes additional processes for passive ADAS, including the presentation of driver alerts and warnings to the human operator.

Returning to the description of **FIG. 4****,** process **400** includes an operation **422** for identifying deviations between driver response actions **402** and prescriptive response actions **112,** generated by conditional imitation learning model **101.** In many implementations, operation **422** involves computing a cross entropy value between driver response actions **402** and prescriptive response actions **112.** The cross entropy calculation is a loss function recognizable to a user skilled in the art as an approach for computing the risk associated with an output (e.g., driver response actions **402)** in view of an expected value (e.g., prescriptive response actions **112).** In the context of operation **422,** the risk can be similarly thought of as a measure of how far a driver's behavior deviates from the behavior prescribed by the conditional imitation learning model **101.** For example, in an E2E artificially intelligent CAS system, a driver continuing to accelerate as they approach a parked vehicle ahead will be assigned a larger risk value when compared to the prescribed response action of prompt braking in response to the imminent collision with the parked vehicle. In operation **442,** the cross entropy can be standardized (e.g., to a scale of [0, 1] that increases proportionately with risk) to obtain an interpretable risk value. A pre-determined risk metric threshold, such as 0.5, 0.6, or 0.7, can be assigned to the risk metric. In decision **462,** the risk metric output associated with the cross entropy value between driver response actions **402** and prescriptive response actions **112** can be compared to the pre-determined threshold value. If the risk value is above the threshold, the risk is classified as unacceptable. If the risk value is below the threshold, the risk is classified as acceptable. When an unacceptable risk is detected, autonomous driving model **100** including conditional imitation learning model **101** acquires autonomous control of the vehicle in operation **481** to eliminate or mitigate risk. In one implementation, the autonomous driving model **100** retains autonomous control for a pre-determined length of time, such as 3 seconds or 30 seconds. When the risk is determined to be acceptable, the human driver retains manual control of the vehicle in operation **483.**

In some implementations, a first pre-determined threshold value is assigned to the risk metric that defines a moderate risk, and a second, higher pre-determined threshold value is assigned to the risk metric that defines a high risk. For example, a moderate risk threshold value may be 0.4 while a high risk threshold value is 0.6. If the outputted risk metric for a pair of driver response actions **402** and prescriptive response actions **112** is below 0.4, the driver retains manual control. If the outputted risk metric for a pair of driver response actions **402** and prescriptive response actions **112** is above 0.4 but less than 0.6, the driver retains manual control and a driver alert warning the driver of the elevated risk (e.g., a visual warning or an alert sound) is presented towards the driver to encourage the driver to correct their behavior. If the outputted risk metric for a pair of driver response actions **402** and prescriptive response actions **112** is above 0.6, the autonomous driving model **100** acquires autonomous control of the vehicle.

In many implementations, semi-autonomous driving process **400** is employed as a CAS tool. Further features of the disclosed E2E, artificially intelligent CAS including passive ADAS features such as driver alerts and displayed driving guidance will be discussed further below with reference to **FIGS. 5****, 6A-D,** and **7A-D.**

### Collision Avoidance System and Driver Alerts

**FIG. 5** is a schematic diagram **500** showing the generation of collision avoidance data **528** from the prescriptive outputs **112** of an end-to-end autonomous driving model **100,** in accordance with certain implementations of the present disclosure. Similarly to previous descriptions of model **100,** the autonomous driving model **100** processes environmental driving data with reference to a present driving state including image data **102a,** non-camera data **102b** like LiDAR data, and a directive condition **102c** related to an intended path. The input data is pre-processed in layer **103** to generate a set of input embeddings **502,** including both token embeddings (e.g., tokenized image data by a convolutional layer) and positional embeddings to retain location data within the input data. The pre-processing step further includes tokenizing the environmental data to generate environmental data tokens, mapping the environmental data tokens to a reduced dimensional vector space to produce environmental data embeddings, and adding the environmental data embeddings to positional embeddings to generate input embeddings **502** for the disclosed E2E neural network, wherein the positional embeddings preserved spatial information for the environmental data tokens. The input embeddings are processed by conditional imitation learning model **101,** further including processing the generated input embeddings **502,** combined with compressed embeddings from nine or more earlier driving states over at least three seconds, using encoding layer **104** and generating, as output, a compressed embedding for the present driving state **108** using compression layer **106.** Classification head **110** generates prescriptive steering and speed control actions **112** in response to the present driving state.

Many implementations of the disclosed CAS system and methods illustrated by process **500** further include extracting a set of attention weights **524** from model **101,** and generating, using the positional embeddings, an attention map **526** including a projection of the extracted attention weights. A user skilled in the art will recognize the meaning of attention weights within a transformer model, leveraging attention weights to infer the importance of various input features and tokens, and generation of an attention map to visualize attention as an interpretability technique for transformer processing. A magnitude of a particular attention weight **524** increases proportionally to an importance of the particular attention weight in generating the prescriptive steering and speed actions. By using the positional embeddings, the attention weight associated with a particular token can be used to infer particular regions within the data, such as a LiDAR map or a camera image, that were important to the generated output **112.**

In various implementations, extraction of attention weights and generation of an attention map can be leveraged to detect important objects or regions surrounding the vehicle (e.g., a detected object that is in close proximity to a vehicle, a red light, or an ending lane) and present the detection information towards the driver to assist the driver's decision making. An object can be implicitly detected within a region of an area of real space surrounding the vehicle based on (i) a comparison of an average attention weight value within the region and another average attention weight value within one or more adjacent regions and (ii) the positional embeddings. Examples further illustrating the use of attention maps, generated by projecting the attention weights onto an image or a display, for object detection are explained with reference to **FIGs. 6A-D** and **7A-D.**

Additional collision avoidance data **528** can be generated from a combination of the prescriptive response action **112,** the current response action **512** (e.g., a driver's response action during manual control such as response action **412** of process **400)** and/or the attention map **526.** For example, a risk metric computed as described with reference to process **400** can be presented towards the driver as a scaled value, a scale, or a classification (e.g., projecting the word "RISK!" or emitting a beeping tone). The prescriptive response action **112** can be presented towards the driver, such as a suggested speed, an instruction to accelerate or brake, or a suggested correction to the steering wheel orientation for lane keeping or collision avoidance.

In some implementations, the driver is presented with a video feed from one or more cameras coupled to the vehicle, similar to the commonly implemented "back-up camera" or "360 camera" views included in a vehicle's dashboard, or a map diagram of the vehicle and surrounding area indicating sensor data from LiDAR (e.g., proximity indicators demonstrating that the front or rear of a vehicle is in close proximity to another object). The camera feed or regenerated map graphic presented to the driver can include an attention map overlayed onto the camera feed or graphic as a heat map, coloring regions around the vehicle that are in close proximity to a detected object or objects detected near the vehicle in close proximity to the vehicle. In other implementations, the technology disclosed includes a heads-up display (HUD) projected from the vehicle dashboard such that the generated attention map can be transformed and projected directly onto the heads up display so that the driver need not take their eyes off the road to see objects detected as important. This may be considered augmented reality. Whether the graphical user interface display is a screen display on the driver's dashboard or a HUD, the display may further include useful information such as a prescribed action **112** or a risk metric.

**FIGs. 6A-D** show a first example graphical user interface for a collision avoidance system. A first example is shown with reference to collision avoidance user interface **600A** in **FIG. 6A****.** In the video from which this frame was captured, there is a vehicle ahead **608** that is in the same left hand fast lane as the driver and a vehicle to the right that is exiting the road. Collision avoidance user interface **600A** is a HUD presented towards the driver as a projection above the dashboard. In the bottom lefthand corner, we see a trio of meters corresponding respectively to the prescribed acceleration from an AI **612** (i.e., autonomous driving model **100),** the current acceleration executed by the human driver **614,** and a risk **616.** As shown in **FIG. 6A****,** the AI **612** currently recommends a moderate acceleration value, whereas the driver **614** is currently slightly decelerating, despite being the fast lane. A risk metric, which can be computed using process **400,** is presented as a very high risk level in risk meter **616.** Accordingly, the driver is presented with a large "ACCELERATE" alert **604** in all capital letters within a bright red box at the top of the screen. Intuitively, this makes sense, as it is dangerous to suddenly slow or stop your vehicle on a busy roadway. In the bottom center, we see navigational directional cues **618** presented towards the driver in the format of direction "whiskers." A black, solid line arrow shows the instructed direction per the navigational directions. A green arrow shows the prescribed orientation from model **100** to both avoid a collision and stay on route. A dashed-line, white arrow shows the current direction of the vehicle in response to the driver's current steering wheel orientation. While the current driver actions and prescribed AI actions are similar for steering in example **FIG. 6A****,** the driver is able to use navigation direction cues **618** as an informative tool to guide vehicle maneuvering. A heat map is projected onto display **600A** from attention weights extracted from model **101.** Accordingly, a vehicle ahead in the same lane is brightly lit up as a red region **608.** Region **608** is considered important to model **101,** and this information is communicated to the driver via the heat map.

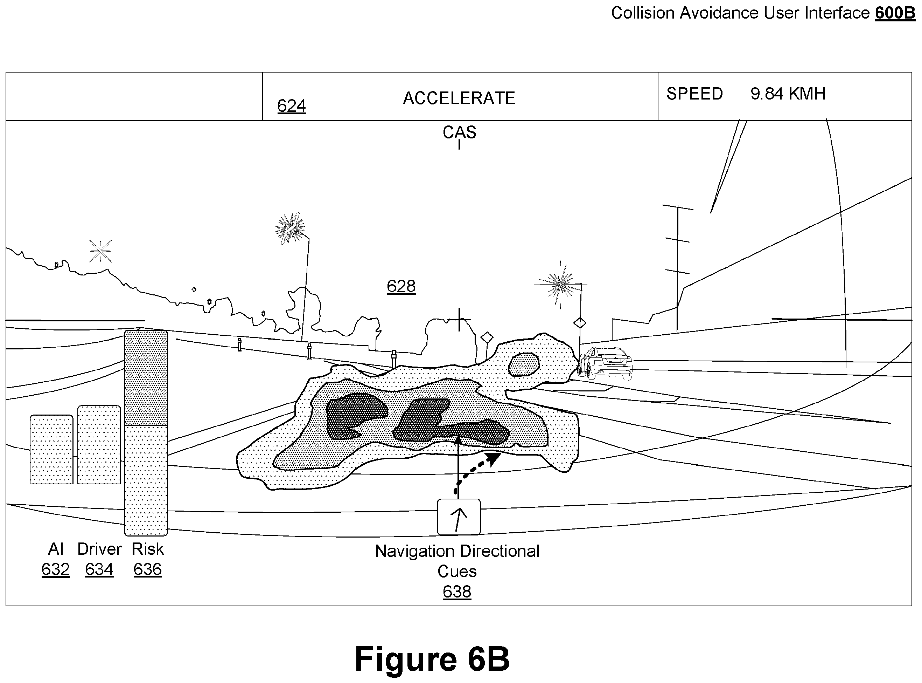

A second example is shown with reference to collision avoidance user interface **600B in** **FIG. 6B****,** containing many of the same features as shown in interface **600A** but a different driving scenario. Again, in the bottom lefthand corner, we see acceleration meters for the AI **632** operating in shadow mode and the human driver **634.** In the illustrated example within interface **600B,** the prescribed acceleration for AI **632** and the actual acceleration for driver **634** are similar, so there is no instruction presented to the driver to accelerate or brake. However, the navigation directional cues **638** indicate that the driver's steering angles to the right as the road bends to the left. The driver's behavior deviates substantially from the prescribed output actions from model **101.** The navigation directs the vehicle to stay straight with a slight right lean, as indicated by the solid black arrow. The solid green arrow, illustrating the prescribed output steering orientation from model **101,** aligns similarly to the solid black arrow. As indicated by the white dotted-line arrow curving far to the right, the human driver is currently swerving far to the right. If the driver continues on this route, they may swerve out of their lane, or belatedly take the exit seen to the right of the display **600B.** The potential lane departure introduced by the driver's steering behavior introduces an imminent collision risk, as indicated by the large risk value indicated by risk meter **636.** Accordingly, the driver is presented with a large "GO LEFT" alert **624** in all capital letters within a red box at the top of the screen. The alert means turn the wheel to the left, relative to the current steering. Again, the driver also sees a heat map showing important regions of the display in a bright-red colored region **628.**

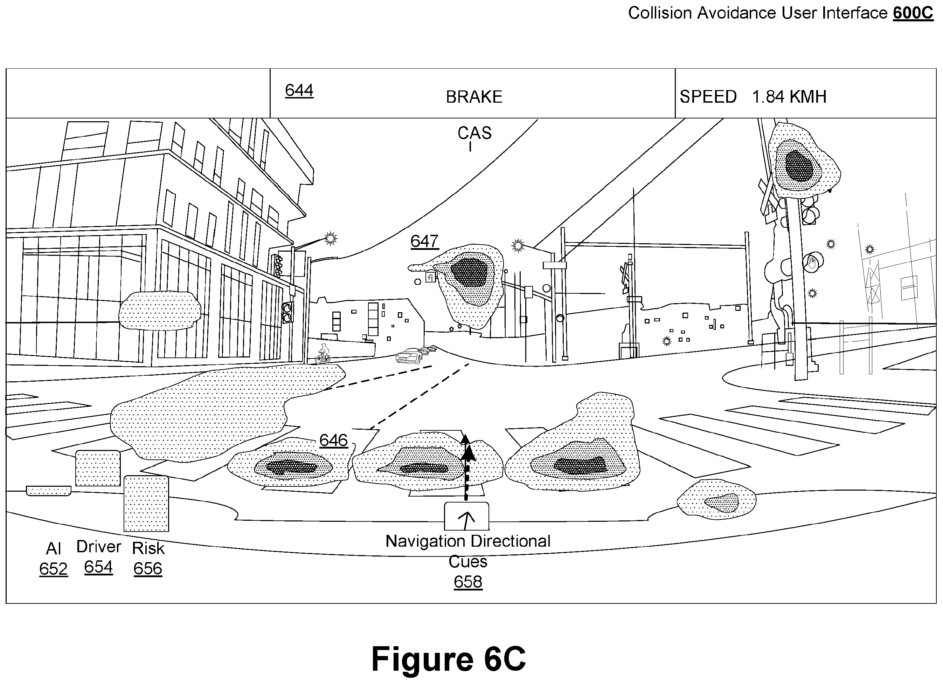

A third example is shown with reference to collision avoidance user interface **600C** in **FIG. 6C****,** containing many of the same features as shown in interfaces **600A** and **600B** but a different driving scenario. In the video from which this frame was taken, the driver was rolling toward the crosswalk, despite a red light signal. In **600C,** that the vehicle is approaching an intersection with a stoplight. Again, in the bottom lefthand corner, we see acceleration meters for the AI **652** operating in shadow mode and the human driver **654.** The prescribed acceleration for AI **652** is to decelerate in accordance with the red light **647** called out by the heat map. The driver meter **654** shows that the driver is still currently slightly accelerating. The AI prescribed action in **652** is braking. There is a low risk **(656)** associated with the driver's omission of braking at this point, which would rise as the crosswalk nears. The large "BRAKE" alert **644** in all capital letters anticipates the need to stop accelerating and start breaking. However, the navigation directional cues **638** indicate that the navigational instruction (solid black arrow), the AI prescribed orientation (solid green arrow) and the current driver's steering wheel orientation (dotted white line arrow) all agree in pointing straight. Again, the driver also sees a heat map showing important regions of the display including a bright-red colored region **648** overlayed on a "No Right Turn" sign, another bright-red colored region **647** overlayed on a red stoplight, and a lighter colored region **646** indicating importance over the crosswalk ahead of the vehicle. Regions **647** and **648** both appear in darker color shades than region **646,** corresponding to a higher degree of importance for the AI.

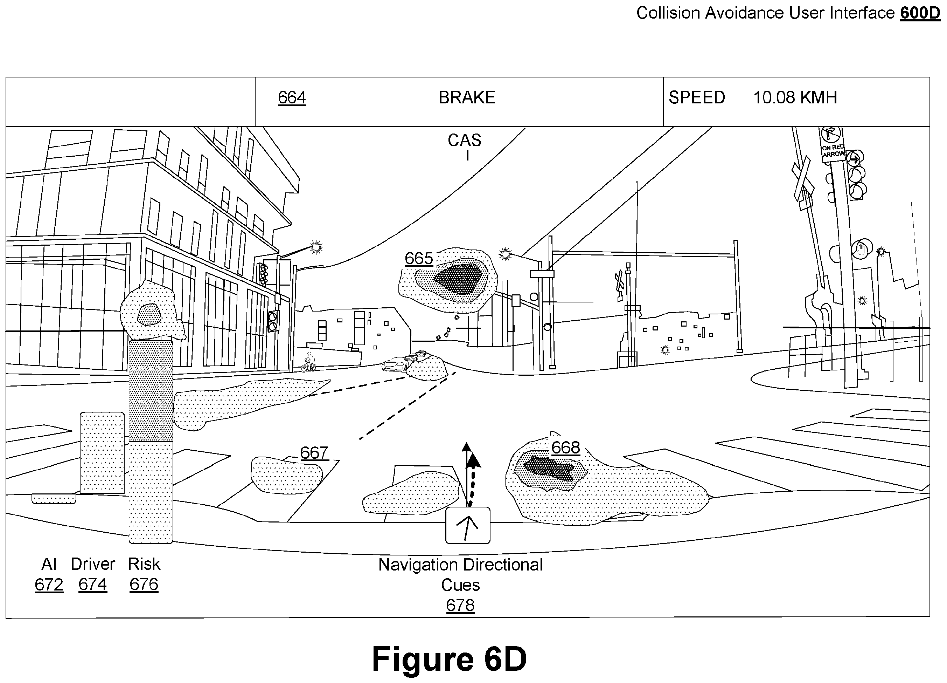

A fourth example **600D** is shown in **FIG. 6D****,** with a similar environment as in **600C,** but with a pedestrian **668** in the crosswalk and the user speeding up **674** through the red light **665.** The vehicle appears to be stopped at or approaching the same intersection in both **600C** and **600D** with a crosswalk directly in front of the vehicle, and according to navigational directional cues **678,** the vehicle is still oriented in a forward direction. The AI meter **672** shows that the prescribed responsive action from the AI is still to decelerate, but the driver meter **674** shows that the driver is accelerating the vehicle. In example **600D,** a pedestrian is now in the crosswalk. According to the heat map of example **600D,** the stoplight region **665** is still a bright red, corresponding to a high degree of importance. The crosswalk is still emphasized in the heat map, noted in region **667,** but the majority of the crosswalk region is still a cooler shade (i.e., less important) than the stoplight region **665** for the AI decision-making process. However, a bright red region **668** of the heat map overlaps with the feet of the pedestrian within the crosswalk, indicating that the pedestrian was also determined to be a highly important region for the AI in deciding to decelerate. Accordingly, the risk meter **676** shows a much higher level of risk when a pedestrian is within the crosswalk for example **600D** than for the same intersection without a pedestrian in the crosswalk for example **600C.**

**FIGs. 7A-D** show a second example graphical user interface for a collision avoidance system. While the graphical user interface shown in **FIGs. 7A-D** corresponds to a local delivery robotic transporter, as described further in commonly-owned U.S. Patent Applications identified above, it is to be understood that a similar user interface can be applied for a road vehicle as well. Moreover, a user skilled in the art will recognize that the example interfaces within **FIGs. 6A-D** and **7A-D** are provided for illustrative purposes that should not be considered limiting, and many additional various displays in other implementations can be inferred from the examples provided.

**In** **FIG. 7A****,** an example interface **700A** shows similar prescriptive and actual acceleration meters for an AI **720** and a human operator **721,** navigational directional cues **722,** and a risk meter **724.** The prescriptive and actual direction are exactly coincident, so only one directional cue is visible. In the display, we see that the transporter robot is approaching a pedestrian **702** without room to pass on either side, due the suitcase and parked car. The human operator continues to accelerate per human operator acceleration meter **721** and the green directional arrow **722.** Without immediate braking intervention, the robot will soon collide with the pedestrian **702.** The AI acceleration meter **720** shows that the AI-generated prescriptive output action includes braking to avoid colliding with the pedestrian **702.** The risk associated with the current operator behavior is very high, as shown in risk meter **724,** as a result of the deviation between the human operator behavior and the AI-generated prescriptive outputs.

Next, in example **700B,** we see the same scenario again as in **700A** but in example **700B,** the human operator has executed braking in accordance with the recommended AI action as shown by meters **740** and **741.** Accordingly, the robot transporter is less likely to collide with pedestrian **702** and the risk shown in meter **744** is decreased from previously in example **700A.**

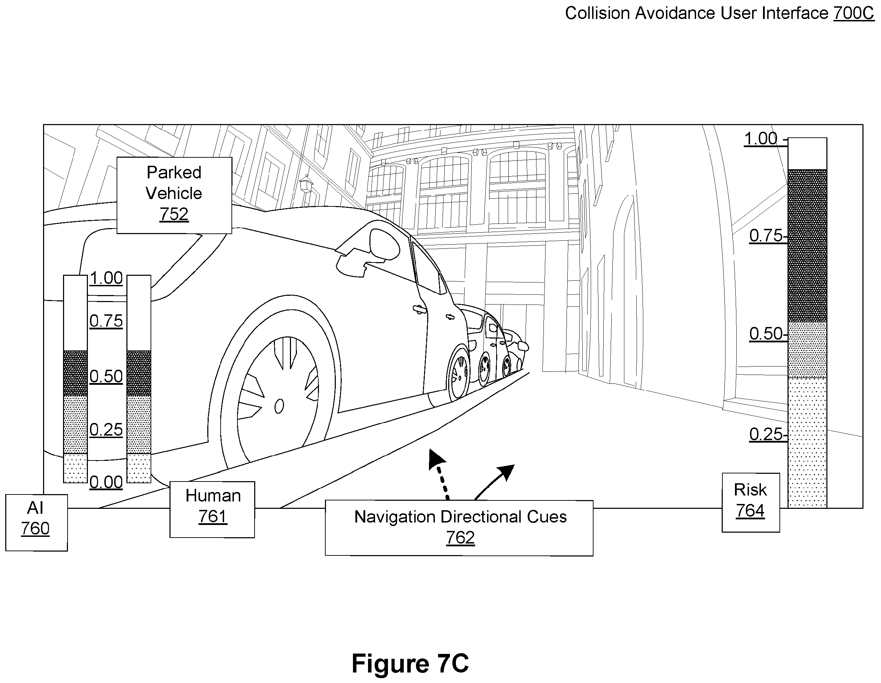

**FIGs. 7C-D** similarly correspond to a robot transporter driving on a sidewalk, but the displayed examples **700C** and **700D** each show a scenario in which the robot transporter is turning to the left and will collide with a parked vehicle **752** if the path is not corrected. In contrast to example **700A,** the problematic behavior can be corrected by changing the orientation of the robot without needing to change the speed. In example **700C,** the AI-recommended acceleration and human operator acceleration control are similar per meters **760** and **761,** but there is a substantial difference in the prescribed steering orientation and true current steering orientation, as shown by navigational cues **762.** The white arrow shows the true current steering orientation from the manual human operator control, which is tilted towards the left and directly facing the parked vehicle **752.** The green arrow shows that the AI recommends turning the steering orientation far to the right to correct course and avoid a collision with parked vehicle **752.** The risk, as shown in meter **764,** is currently very high due to the difference between the true current steering orientation and the AI-generated prescribed steering orientation. A human operator can utilize the driver alert information provided on the screen (e.g., the navigational directional cues **762** and risk meter **764)** to correct the current driving behavior, thereby mitigating the risk of an imminent collision.

Accordingly, in example **700D,** the navigation directional cues **762** now show that the green arrow (indicating the AI-recommended steering orientation) is turned to the right in agreement with the white arrow (indicating the human operator's steering orientation) and the robot is no longer facing the parked vehicle **752.** The risk is now much lower, as shown in meter **764.** In some implementations, the technology disclosed may execute active ADAS measures for any of the provided example driving tasks above. For example, in the example driving task shown in **FIGs. 7C-D** applying passive collision avoidance ADAS in the form of a driver warning, the high level risk associated with the driver behavior in example **700C** can trigger a transition to autonomous control such that the AI-prescribed braking action is executed.

### Computer System

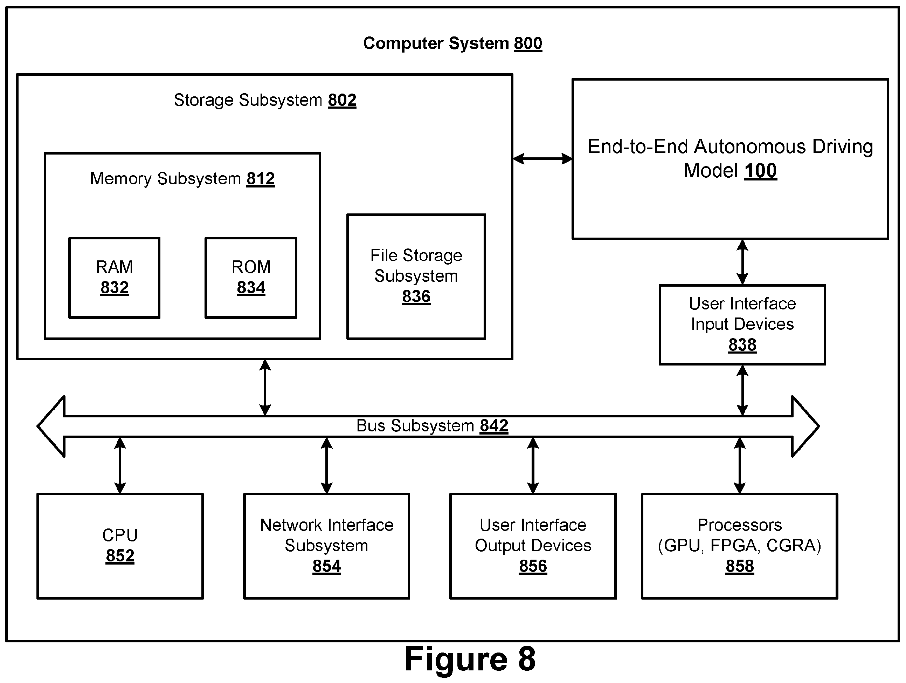

**FIG. 8** illustrates a computer system **800** that can be used to implement the technology disclosed, in accordance with certain implementations of the present disclosure. Computer system **800** includes at least one central processing unit (CPU) **852** that communicates with a number of peripheral devices via bus subsystem **842.** These peripheral devices can include a storage subsystem **802** including, for example, memory devices and a file storage subsystem **836,** user interface input devices **838,** user interface output devices **856,** and a network interface subsystem **854.** The input and output devices allow user interaction with computer system **800.** Network interface subsystem **854** provides an interface to outside networks, including an interface to corresponding interface devices in other computer systems.

In one implementation, the model **100** is communicably linked to the storage subsystem **802** and the user interface input devices **838.** In another implementation, the control unit **826** of the depot and the control unit **832** of the transporter are also communicably linked to the storage subsystem **802** and the user interface input devices **838.** User interface input devices **838** can include a keyboard; pointing devices such as a mouse, trackball, touchpad, or graphics tablet; a scanner; a touch screen incorporated into the display; audio input devices such as voice recognition systems and microphones; and other types of input devices. In general, use of the term "input device" is intended to include all possible types of devices and ways to input information into computer system **800.**

User interface output devices **856** can include a display subsystem, a printer, a fax machine, or non-visual displays such as audio output devices. The display subsystem can include an LED display, a cathode ray tube (CRT), a flat-panel device such as a liquid crystal display (LCD), a projection device, or some other mechanism for creating a visible image. The display subsystem can also provide a non-visual display such as audio output devices. In general, use of the term "output device" is intended to include all possible types of devices and ways to output information from computer system **800** to the user or to another machine or computer system.

Storage subsystem **802** stores programming and data constructs that provide the functionality of some or all of the modules and methods described herein. These software modules are generally executed by processors **858.** Processors **858** can be graphics processing units (GPUs), field-programmable gate arrays (FPGAs), application-specific integrated circuits (ASICs), and/or coarse-grained reconfigurable architectures (CGRAs). Processors **858** can be hosted by a deep learning cloud platform such as Google Cloud Platform^{™}, Xilinx^{™}, and Cirrascale^{™}. Examples of processors **878** include Google's Tensor Processing Unit (TPU)^{™}, rackmount solutions like GX4 Rackmount Series^{™}, GX16 Rackmount Series^{™}, NVIDIA DGX-1^{™}, Microsoft' Stratix V FPGA^{™}, Graphcore's Intelligent Processor Unit (IPU)^{™}, Qualcomm's Zeroth Platform^{™} with Snapdragon processors^{™}, NVIDIA's Volta^{™}, NVIDIA's DRIVE PX^{™}, NVIDIA's JETSON TX1/TX2 MODULE^{™}, Intel's Nirvana^{™}, Movidius VPU^{™}, Fujitsu DPI^{™}, ARM's DynamicIQ^{™}, IBM TrueNorth^{™}, Lambda GPU Server with Testa V100s^{™}, and others.

Memory subsystem **812** used in the storage subsystem **802** can include a number of memories including a main random access memory (RAM) **832** for storage of instructions and data during program execution and a read only memory (ROM) **834** in which fixed instructions are stored. A file storage subsystem **836** can provide persistent storage for program and data files, and can include a hard disk drive, a floppy disk drive along with associated removable media, a CD-ROM drive, an optical drive, or removable media cartridges. The modules implementing the functionality of some implementations can be stored by file storage subsystem **836** in the storage subsystem **802,** or in other machines accessible by the processor. Bus subsystem **842** provides a mechanism for letting the various components and subsystems of computer system **800** communicate with each other as intended. Although bus subsystem **842** is shown schematically as a single bus, alternative implementations of the bus subsystem can use multiple busses.

Computer system **800** itself can be of varying types including a personal computer, a portable computer, a workstation, a computer terminal, a network computer, a television, a mainframe, a server farm, a widely-distributed set of loosely networked computers, or any other data processing system or user device. Due to the ever-changing nature of computers and networks, the description of computer system **800** depicted in **FIG. 8** is intended only as a specific example for purposes of illustrating the preferred implementations of the present invention. Many other configurations of computer system **800** are possible having more or less components than the computer system depicted in **FIG. 8****.**

Each of the processors or modules discussed herein may include an algorithm (*e.g*., instructions stored on a tangible and/or non-transitory computer readable storage medium) or sub-algorithms to perform particular processes. The model **100** is illustrated conceptually as a collection of modules, but may be implemented utilizing any combination of dedicated hardware boards, DSPs, processors, etc. Alternatively, system **100** may be implemented utilizing an off-the-shelf PC with a single processor or multiple processors, with the functional operations distributed between the processors. As a further option, the modules described below may be implemented utilizing a hybrid configuration in which some modular functions are performed utilizing dedicated hardware, while the remaining modular functions are performed utilizing an off-the-shelf PC and the like. The modules also may be implemented as software modules within a processing unit.

Various processes and steps of the methods set forth can be carried out using a computer. The computer can include a processor that is part of a detection device, networked with a detection device used to obtain the data that is processed by the computer or separate from the detection device. In some implementations, information (*e.g*., image data) may be transmitted between components of a system disclosed herein directly or via a computer network. A local area network (LAN) or wide area network (WAN) may be a corporate computing network, including access to the Internet, to which computers and computing devices comprising the system are connected. In one implementation, the LAN conforms to the transmission control protocol/internet protocol (TCP/IP) industry standard. In some instances, the information (*e.g*., image data) is input to a system disclosed herein via an input device (*e.g.,* disk drive, compact disk player, USB port etc.). In some instances, the information is received by loading the information, *e.g*., from a storage device such as a disk or flash drive.

A processor that is used to run an algorithm or other process set forth herein may comprise a microprocessor. The microprocessor may be any conventional general purpose single- or multi-chip microprocessor such as a Pentium^{™} processor made by Intel Corporation. A particularly useful computer can utilize an Intel Ivybridge dual-16 core processor, LSI raid controller, having 168 GB of RAM, and 2 TB solid state disk drive. In addition, the processor may comprise any conventional special purpose processor such as a digital signal processor or a graphics processor. The processor typically has conventional address lines, conventional data lines, and one or more conventional control lines.

The preceding description is presented to enable the making and use of the technology disclosed. Various modifications to the disclosed implementations will be apparent, and the general principles defined herein may be applied to other implementations and applications without departing from the spirit and scope of the technology disclosed. Thus, the technology disclosed is not intended to be limited to the implementations shown but is to be accorded the widest scope consistent with the principles and features disclosed herein. The scope of the technology disclosed is defined by the appended claims.

### Some Particular Implementations

We describe some particular implementations and features usable for providing driver assistance alerts to a driver using an E2E model trained for autonomous and semiautonomous driving. Many implementations include a method of providing driver assistance alerts to a driver. The method includes receiving environmental data for a sequence of driving states including at least video from a camera, returns from an optical sensor, and location data from a GNSS receiver, wherein the camera, the optical sensor, and the GNSS receiver are coupled to a processor carried by a vehicle and processing the environmental data as input to an end-to-end neural network. The end-to-end neural network is trained to generate prescriptive steering and speed control actions in response to a present driving state. The method includes analyzing hidden layer data and output data from the end-to-end neural network to estimate collision avoidance data, wherein the collision avoidance data includes, at least one or more detected objects within the video from the camera, a directional cue. The directional cue is a projection overlay based on the prescriptive steering control actions onto a heads up display, and a risk metric that quantifies a dissimilarity between the generated prescriptive steering and speed control actions, and received driver steering and speed control actions. The method also includes presenting a user interface to the driver including driver assistance alerts based on the collision avoidance data.

We describe some particular implementations related to the method for providing driver alerts. The directional cue may be projected onto the heads up display. Within the user interface a dynamic whisker arrow may indicate a prescriptive vehicle orientation relative to a current vehicle orientation based on the generated prescriptive steering control actions. A prescriptive whisker can be juxtaposed with a current human action whisker.

In some implementations, obtaining the risk method further includes calculating a cross entropy between the generated prescriptive steering and speed control actions and current driver steering and speed control actions and standardizing the cross entropy calculation to generate a risk metric output. The risk metric output is a proxy for an imminent collision risk and increases proportionally as the current driver steering and speed control actions deviate further from the generated prescriptive steering and speed control actions.

One implementation includes, in response to the response metric output, maintaining a manual driving mode while the risk metric output is less than a pre-determined threshold value, wherein the manual driving mode includes permitting the vehicle to apply the current driver steering and speed control input actions, and engaging in an autonomous driving mode when the risk metric output is equal to or greater than the pre-determined threshold value, wherein the autonomous driving mode includes causing the vehicle to apply the prescriptive steering and speed control input actions. One implementation further includes categorizing the risk metric into risk levels by defining a particular risk level as including risk metric outputs within a pre-determined range between a lower boundary value and an upper boundary value.

This method and other implementations of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this section can readily be combined with sets of base features identified as implementations.

For some implementations, the user interface presents, to the driver, a quantitative risk including the risk metric output or a categorical risk including the risk level based on the risk metric value. In other implementations, the user interface further presents the generated prescriptive steering and speed control actions to the driver. The driver alerts, such as the risk or a prescribed response action can include a visual display, an audio signal, or a haptic signal. The visual display may be a display screen or a HUD.

This method and other implementations of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this section can readily be combined with sets of base features identified as implementations.

One implementation includes pre-processing the environmental data prior to being provided to the end-to-end neural network, including tokenizing the environmental data for the present driving state to generate environmental data tokens, mapping the environmental data tokens to a reduced dimensional vector space to produce environmental data embeddings, and adding the environmental data embeddings to positional embeddings to generate input embeddings for the end-to-end neural network, wherein the positional embeddings preserve spatial information for the environmental data tokens.

This method and other implementations of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this section can readily be combined with sets of base features identified as implementations.

Some implementations include a disclosed end-to-end neural network configured for autonomous driving, wherein the end-to-end neural network is a transformer model trained for end-to-end autonomous driving, and the transformer model processing the environmental data further includes processing the generated input embeddings combined with compressed embeddings from nine or more earlier driving states over at least three seconds and generating, as output, a compressed embedding for the present driving state and prescriptive steering and speed control actions in response to the present driving state.

Many implementations further include extracting a set of attention weights from the transformer model, and generating, using the positional embeddings, an attention map including a projection of the extracted attention weights, wherein a magnitude of a particular attention weight increases proportionally to an importance of the particular attention weight in generating the prescriptive steering and speed actions, and an object is implicitly detected within a region of an area of real space surrounding the vehicle based on a comparison of an average attention weight value within the region and another average attention weight value within one or more adjacent regions and the positional embeddings. In one implementation, the one or more detected objects presented within the heads up display further includes color-coding attention weights within the attention map enabling visual identification of implicitly detected objects and projecting an overlay of the color-coded attention map onto a heads up display.

The method can also include storing a history of the video from the camera and the driver assistance alerts presented to the driver within a driving database, wherein the driving database is available for additional data analysis and data auditing after a driving activity is completed.

In some implementations, the disclosed method is leveraged for a driver education tool that provides feedback to a driver while learning a new driving task. For example, the driver education tool can be used for teaching new drivers or specialized forms of driving, like racing. The disclosed method can also be implemented in ADAS tools for safe driving monitoring by logging the history of risk and recorded driving behaviors within the vehicle.

Another method practicing the technology disclosed involves training a neural network to generate driver assistance alert data. The method includes receiving environmental data for a sequence of driving states resulting from human driving, including at least video from a camera, returns from an optical sensor, and location data from a GNSS receiver, wherein the camera, the optical sensor, and the GNSS receiver are coupled to a processor carried by a vehicle. It includes processing the environmental data as input to imitation training of an end-to-end neural network, including training the end-to-end neural network to generate prescriptive steering and speed control actions in response to a present driving state. The training includes analyzing hidden layer data and output data from the end-to-end neural network to estimate collision avoidance data and imitation training of the hidden layer data. The collision avoidance data includes, at least a directional cue and a speed control cue. The directional and speed cues are suitable to generate prescriptive steering and speed control actions projected onto a heads up display or other dashboard display of a vehicle.

The training produces attention weights in the end-to-end neural network's hidden layer data that are indicate areas of the video from the camera that contribute most significantly to the generated prescriptive steering and speed cues.

This method can further include configuring a system that includes the end-to-end neural network and further includes a risk metric generator. The training extends to parameters of the risk metric generator used to generate a normalized risk metric that quantifies a dissimilarity between the generated prescriptive steering and speed control cues and received driver steering and speed control actions that vary from the generated prescriptive steering and speed control actions, whereby the normalized risk metric onto a heads up display or other dashboard display of a vehicle.

This method can be combined with features disclosed in the implementations above and throughout this application which are not individually enumerated or repeated with the set of training features. The reader will understand how features identified in this section can readily be combined with sets of base features identified as implementations.

The technology disclosed can be practiced as a system, method, or article of manufacture. For instance, the technology disclosed can be practiced as a system with a hardware processor, memory coupled to the processor, and instructions executable on the processor that, when executed, cause the system to carry out any of the methods described. Such a system can include connected sensors from which the environmental data are received. Similarly, the technology disclosed can be practiced as computer readable medium impressed with instructions executable on a hardware processor that, when executed, cause a system including the processor to carry out any of the methods described. Such a computer readable medium impressed with instructions for receiving environmental data from sensors.

While the technology disclosed is disclosed by reference to the preferred embodiments and examples detailed above, it is to be understood that these examples are intended in an illustrative rather than in a limiting sense. It is contemplated that modifications and combinations will readily occur to those skilled in the art, which modifications and combinations will be within the scope of the following claims.

## Claims

1. A computer-implemented method of providing driver assistance alerts to a driver, the method including:
receiving environmental data for a sequence of driving states including at least video from a camera, returns from an optical sensor, and location data from a GNSS receiver, wherein the camera, the optical sensor, and the GNSS receiver are coupled to a processor carried by a vehicle;
processing the environmental data as input to a transformer-based end-to-end neural network, wherein the end-to-end neural network is trained to generate prescriptive steering and speed control actions in response to a present driving state;
analyzing hidden layer data and output data from the end-to-end neural network to estimate collision avoidance data, wherein the collision avoidance data includes, at least:
one or more detected objects within the video from the camera, extracted from attention weights of the hidden layer data to generate an attention map,
a directional cue, wherein the directional cue is a projection overlay based on the prescriptive steering control actions onto a heads up display, and
a risk metric that quantifies a dissimilarity between the generated prescriptive steering and speed control actions, and received driver steering and speed control actions; and
presenting, to the driver, a user interface including driver assistance alerts based on the collision avoidance data.

2. The computer-implemented method of claim 1, wherein the directional cue projected onto the heads up display within the user interface is a dynamic whisker arrow indicating a prescriptive vehicle orientation relative to a current vehicle orientation based on the generated prescriptive steering control actions.

3. The computer-implemented method of claim 1, wherein obtaining the risk metric further includes:
calculating a cross entropy between the generated prescriptive steering and speed control actions and current driver steering and speed control actions and standardizing the cross entropy calculation to generate a risk metric output,
wherein the risk metric output is a proxy for an imminent collision risk and increases proportionally as the current driver steering and speed control actions deviate further from the generated prescriptive steering and speed control actions.

4. The computer-implemented method of any of claims 1-3, further including, in response to the risk metric output:
maintaining a manual driving mode while the risk metric output is less than a pre-determined threshold value, wherein the manual driving mode includes permitting the vehicle to apply the current driver steering and speed control input actions, and
engaging in an autonomous driving mode when the risk metric output is equal to or greater than the pre-determined threshold value, wherein the autonomous driving mode includes causing the vehicle to apply the prescriptive steering and speed control input actions.

5. The computer-implemented method of any of claims 1-4, further including categorizing the risk metric into risk levels by defining a particular risk level as including risk metric outputs within a pre-determined range between a lower boundary value and an upper boundary value.

6. The computer-implemented method of any of claims 1-5, wherein the user interface presents, to the driver, a quantitative risk including the risk metric output or a categorical risk including the risk level based on the risk metric value.

7. The computer-implemented method of any claims 1-6, wherein the driver assistance alerts include one or more of a visual display, an audio signal, or a haptic signal.

8. The computer-implemented method of any of claims 1-7, wherein the user interface further presents the generated prescriptive steering and speed control actions to the driver.

9. The computer-implemented method of any of claims 1-8, wherein the environmental data is pre-processed prior to being provided to the end-to-end neural network, the pre-processing further including:
tokenizing the environmental data for the present driving state to generate environmental data tokens,
mapping the environmental data tokens to a reduced dimensional vector space to produce environmental data embeddings, and
adding the environmental data embeddings to positional embeddings to generate input embeddings for the end-to-end neural network, wherein the positional embeddings preserve spatial information for the environmental data tokens.

10. The computer-implemented method of claim 9, wherein the transformer-based end-to-end neural network is a transformer model trained for end-to-end autonomous driving, and the transformer model processing the environmental data further includes:
processing the generated input embeddings combined with compressed embeddings from nine or more earlier driving states over at least three seconds and generating, as output, a compressed embedding for the present driving state and prescriptive steering and speed control actions in response to the present driving state.

11. The computer-implemented method of any of claims 1-10, further including extracting the attention weights from the transformer model, and generating, using the positional embeddings, an attention map including a projection of the extracted attention weights, wherein:
a magnitude of a particular attention weight increases proportionally to an importance of the particular attention weight in generating the prescriptive steering and speed actions, and
an object is implicitly detected within a region of an area of real space surrounding the vehicle based on (i) a comparison of an average attention weight value within the region and another average attention weight value within one or more adjacent regions and (ii) the positional embeddings.

12. The computer-implemented method claim 9, wherein presenting, via the user interface, the one or more detected objects within the heads up display further includes color-coding attention weights within the attention map enabling visual identification of implicitly detected objects and projecting an overlay of the color-coded attention map onto a heads up display.

13. The computer-implemented method of any of claims 1-12, further including storing a history of the video from the camera and the driver assistance alerts presented to the driver within a driving database, wherein the driving database is available for additional data analysis and data auditing after a driving activity is completed.

14. A computer-implemented method of training a neural network to generate driver assistance alert data, the method including:
receiving environmental data for a sequence of driving states resulting from human driving, including at least video from a camera, returns from an optical sensor, and location data from a GNSS receiver, wherein the camera, the optical sensor, and the GNSS receiver are coupled to a processor carried by a vehicle; and
processing the environmental data as input to imitation training of a transformer-based end-to-end neural network, including training the end-to-end neural network to generate prescriptive steering and speed control actions;
whereby attention weights of the trained, transformer-based end-to-end neural network are available to be extracted from hidden layer data and to indicate areas of the video that contribute most significantly to the generated prescriptive steering and speed control actions.

15. The method of any of claims 1-14, further including configuring a system including the end-to-end neural network and further including a risk metric generator, including:
training parameters of the risk metric generator to generate a normalized risk metric that quantifies a dissimilarity between the generated prescriptive steering and speed control actions and received driver steering and speed control actions that vary from the generated prescriptive steering and speed control actions, whereby the normalized risk metric onto a heads up display.

## Patentansprüche

1. Computerimplementiertes Verfahren zum Bereitstellen von Fahrerassistenzwarnungen für einen Fahrer, wobei das Verfahren einschließt:
Empfangen von Umgebungsdaten für eine Folge von Fahrzuständen, die mindestens Videomaterial von einer Kamera, Rückmeldungen von einem optischen Sensor und Standortdaten von einem GNSS-Empfänger einschließen, wobei die Kamera, der optische Sensor und der GNSS-Empfänger mit einem Prozessor gekoppelt sind, der durch ein Fahrzeug getragen wird;
Verarbeiten der Umgebungsdaten als Eingabe in ein transformer-basiertes neuronales End-to-End-Netzwerk, wobei das neuronale End-to-End-Netzwerk darauf trainiert ist, präskriptive Lenk- und Geschwindigkeitssteueraktionen als Antwort auf einen aktuellen Fahrzustand zu erzeugen;
Analysieren von Daten der verborgenen Schicht und von Ausgabedaten des neuronalen End-to-End-Netzwerkes, um Kollisionsvermeidungsdaten zu schätzen, wobei die Kollisionsvermeidungsdaten mindestens einschließen:
ein oder mehrere ermittelte Objekte innerhalb des Videomaterials von der Kamera, die aus Aufmerksamkeitsgewichten der Daten der verborgenen Schicht extrahiert wurden, um eine Aufmerksamkeitskarte zu erzeugen,
einen Richtungshinweis, wobei der Richtungshinweis eine auf den präskriptiven Lenkund Geschwindigkeitssteueraktionen beruhende Projektionsüberlagerung auf ein Heads-Up-Display ist, und
eine Risikokennzahl, die eine Unähnlichkeit zwischen den erzeugten präskriptiven Lenkund Geschwindigkeitssteueraktionen sowie empfangenen Lenk- und Geschwindigkeitssteueraktionen des Fahrers quantifiziert; und
Präsentieren einer Benutzerschnittstelle für den Fahrer, die Fahrerassistenzwarnungen auf der Grundlage der Kollisionsvermeidungsdaten einschließt.

2. Computerimplementiertes Verfahren nach Anspruch 1, wobei der auf das Heads-Up-Display innerhalb der Benutzerschnittstelle projizierte Richtungshinweis ein dynamischer Whisker-Pfeil ist, der eine präskriptive Fahrzeugausrichtung relativ zu einer aktuellen Fahrzeugausrichtung auf der Grundlage der erzeugten präskriptiven Lenk- und Geschwindigkeitssteueraktionen angibt.

3. Computerimplementiertes Verfahren nach Anspruch 1, wobei das Erhalten der Risikokennzahl ferner einschließt:
Berechnen einer Kreuzentropie zwischen den erzeugten präskriptiven Lenk- und Geschwindigkeitssteueraktionen und aktuellen Lenk- und Geschwindigkeitssteueraktionen des Fahrers sowie Normieren der Kreuzentropie-Berechnung, um eine Risikokennzahl-Ausgabe zu erzeugen,
wobei die Risikokennzahl-Ausgabe ein Vertreter für ein unmittelbar bevorstehendes Kollisionsrisiko ist und proportional ansteigt, je weiter die aktuellen Lenk- und Geschwindigkeitssteueraktionen des Fahrers von den erzeugten präskriptiven Lenk- und Geschwindigkeitssteueraktionen abweichen.

4. Computerimplementiertes Verfahren nach einem der Ansprüche 1-3, ferner als Antwort auf die Risikokennzahl-Ausgabe einschließend:
Beibehalten eines manuellen Fahrmodus, solange die Risikokennzahl-Ausgabe kleiner als ein vorbestimmter Schwellenwert ist, wobei der manuelle Fahrmodus einschließt: Zulassen, dass das Fahrzeug die aktuellen Eingabeaktionen des Fahrers zur Lenk- und Geschwindigkeitssteuerung anwendet, und
Eintreten in einen autonomen Fahrmodus, wenn die Risikokennzahl-Ausgabe gleich oder größer als der vorgegebene Schwellenwert ist, wobei der autonome Fahrmodus einschließt: Bewirken, dass das Fahrzeug die präskriptiven Eingabeaktionen zur Lenk- und Geschwindigkeitssteuerung anwendet.

5. Computerimplementiertes Verfahren nach einem der Ansprüche 1-4, ferner einschließend:
Einteilen der Risikokennzahl in Risikostufen, indem eine bestimmte Risikostufe so definiert wird, dass sie Risikokennzahl-Ausgaben innerhalb eines vorbestimmten Bereichs zwischen einem unteren Grenzwert und einem oberen Grenzwert einschließt.

6. Computerimplementiertes Verfahren nach einem der Ansprüche 1-5, wobei die Benutzerschnittstelle dem Fahrer ein quantitatives Risiko, das die Risikokennzahl-Ausgabe einschließt, oder ein kategorisiertes Risiko, das die Risikostufe auf der Grundlage der Risikokennzahl-Ausgabe einschließt, anzeigt.

7. Computerimplementiertes Verfahren nach einem der Ansprüche 1-6, wobei die Fahrerassistenzwarnungen eines oder mehrere von Folgendem einschließen: eine visuelle Anzeige, ein akustisches Signal oder ein haptisches Signal.

8. Computerimplementiertes Verfahren nach einem der Ansprüche 1-7, wobei die Benutzerschnittstelle dem Fahrer ferner die erzeugten präskriptiven Lenk- und Geschwindigkeitssteueraktionen präsentiert.

9. Computerimplementiertes Verfahren nach einem der Ansprüche 1-8, wobei die Umgebungsdaten vorverarbeitet werden, bevor sie dem neuronalen End-to-End-Netzwerk bereitgestellt werden, wobei das Vorverarbeiten ferner einschließt:
Tokenisieren der Umgebungsdaten für den aktuellen Fahrzustand, um Umgebungsdaten-Token zu erzeugen,
Abbilden der Umgebungsdaten-Token auf einen Vektorraum mit verringerter Dimension, um Umgebungsdaten-Einbettungen zu erzeugen, und
Hinzufügen der Umgebungsdaten-Einbettungen zu Positionseinbettungen, um Eingabeeinbettungen für das neuronale End-to-End-Netzwerk zu erzeugen, wobei die Positionseinbettungen räumliche Informationen für die Umgebungsdaten-Token bewahren.

10. Computerimplementiertes Verfahren nach Anspruch 9, wobei das transformerbasierte neuronale End-to-End-Netzwerk ein für durchgängig autonomes Fahren trainiertes Transformer-Modell ist und das Verarbeiten der Umgebungsdaten durch das Transformer-Modell ferner einschließt:
Verarbeiten der erzeugten Eingabeeinbettungen in Kombination mit komprimierten Einbettungen aus neun oder mehr früheren Fahrzuständen über mindestens drei Sekunden sowie als Antwort auf den aktuellen Fahrzustand erfolgendes Erzeugen einer komprimierten Einbettung für den aktuellen Fahrzustand und von präskriptiven Lenk- und Geschwindigkeitssteueraktionen als Ausgabe.

11. Computerimplementiertes Verfahren nach einem der Ansprüche 1-10, ferner einschließend: Extrahieren der Aufmerksamkeitsgewichte aus dem Transformer-Modell und unter Verwendung der Positionseinbettungen erfolgendes Erzeugen einer Aufmerksamkeitskarte, die eine Projektion der extrahierten Aufmerksamkeitsgewichte einschließt, wobei:
die Größe eines jeweiligen Aufmerksamkeitsgewichts proportional zu einer Wichtigkeit des jeweiligen Aufmerksamkeitsgewichts beim Erzeugen der präskriptiven Lenk- und Geschwindigkeitsaktionen zunimmt, und
ein Objekt innerhalb einer Region eines Bereichs des realen Raums, der das Fahrzeug umgibt, auf der Grundlage von Folgendem implizit ermittelt wird: (i) ein Vergleich eines durchschnittlichen Aufmerksamkeitsgewichtswerts innerhalb der Region mit einem anderen durchschnittlichen Aufmerksamkeitsgewichtswert innerhalb einer oder mehrerer angrenzender Regionen und (ii) die Positionseinbettungen.

12. Computerimplementiertes Verfahren nach Anspruch 9, wobei das Präsentieren des einen oder der mehreren erkannten Objekte innerhalb des Heads-Up-Displays über die Benutzerschnittstelle ferner einschließt: Farbcodieren von Aufmerksamkeitsgewichten innerhalb der Aufmerksamkeitskarte, was die visuelle Identifizierung von implizit ermittelten Objekte ermöglicht, und Projizieren einer Überlagerung der farbcodierten Aufmerksamkeitskarte auf ein Heads-Up-Display.

13. Computerimplementiertes Verfahren nach einem der Ansprüche 1-12, ferner einschließend: Speichern eines Verlaufs des Videomaterials von der Kamera und der dem Fahrer präsentierten Fahrerassistenzwarnungen in einer Fahrdatenbank, wobei die Fahrdatenbank für zusätzliche Datenanalysen und Datenprüfung verfügbar ist, nachdem eine Fahraktivität beendet wurde.

14. Computerimplementiertes Verfahren zum Trainieren eines neuronalen End-to-End-Netzwerkes, um Fahrerassistenz-Warnungsdaten zu erzeugen, wobei das Verfahren einschließt:
Empfangen von Umgebungsdaten für eine Folge von Fahrzuständen, die sich aus menschlichem Fahren ergeben, einschließlich mindestens Videomaterial von einer Kamera, Rückmeldungen von einem optischen Sensor und Standortdaten von einem GNSS-Empfänger, wobei die Kamera, der optische Sensor und der GNSS-Empfänger mit einem Prozessor gekoppelt sind, der durch ein Fahrzeug getragen wird; und
Verarbeiten der Umgebungsdaten als Eingabe für das Imitationstraining eines transformer-basierten neuronalen End-to-End-Netzwerkes, welches das Training des neuronalen End-to-End-Netzwerkes, um präskriptive Lenk- und Geschwindigkeitssteueraktionen zu erzeugen, einschließt;
wobei Aufmerksamkeitsgewichte des trainierten, transformer-basierten neuronalen End-to-End-Netzwerkes verfügbar sind, um aus Daten der verborgenen Schicht extrahiert zu werden und Bereiche des Videos anzugeben, die am wesentlichsten zu den erzeugten präskriptiven Lenk- und Geschwindigkeitssteueraktionen beitragen.

15. Verfahren nach einem der Ansprüche 1-14, ferner einschließend: Konfigurieren eines Systems, welches das neuronale End-to-End-Netzwerk einschließt und ferner einen Risikokennzahl-Generator einschließt, einschließlich:
Trainieren von Parametern des Risikokennzahl-Generators, um eine normierte Risikokennzahl zu erzeugen, die eine Unähnlichkeit zwischen den erzeugten präskriptiven Lenk- und Geschwindigkeitssteueraktionen sowie empfangenen Lenk- und Geschwindigkeitssteueraktionen des Fahrers, die von den erzeugten präskriptiven Lenk- und Geschwindigkeitssteueraktionen abweichen, quantifiziert, wobei die normierte Risikokennzahl auf ein Heads-Up-Display projiziert wird.

## Revendications

1. Procédé mis en œuvre par ordinateur de fourniture d'alertes d'assistance au conducteur, le procédé incluant :
la réception de données environnementales pour une séquence d'états de conduite incluant au moins une vidéo provenant d'une caméra, des retours provenant d'un capteur optique et des données de localisation provenant d'un récepteur GNSS, dans lequel la caméra, le capteur optique et le récepteur GNSS sont couplés à un processeur transporté par un véhicule ;
le traitement des données environnementales comme entrée dans un réseau neuronal de bout en bout basé sur un transformateur, dans lequel le réseau neuronal de bout en bout est entraîné à générer des actions prescriptives de commande de direction et de vitesse en réponse à un état de conduite actuel ;
l'analyse de données de couche cachée et de données de sortie du réseau neuronal de bout en bout pour estimer des données d'évitement de collision, dans lequel données d'évitement de collision incluent au moins :
un ou plusieurs objets détectés dans la vidéo de la caméra, extraits de poids d'attention des données de couche cachée pour générer une carte d'attention,
un repère directionnel, dans lequel le repère directionnel est une superposition de projection basée sur les actions prescriptives de commande de direction sur un affichage tête haute, et
une métrique de risque qui quantifie la dissemblance entre les actions prescriptives de commande de direction et de vitesse générées, et les actions de commande de direction de conducteur et de vitesse reçues ; et
la présentation, au conducteur, d'une interface utilisateur incluant des alertes d'assistance à la conduite sur la base des données d'évitement de collision.

2. Procédé mis en œuvre par ordinateur selon la revendication 1, dans lequel le repère directionnel projeté sur l'affichage tête haute dans l'interface utilisateur est une flèche dynamique en whisker indiquant une orientation prescriptive du véhicule par rapport à une orientation actuelle du véhicule sur la base des actions prescriptives de commande de direction générées.

3. Procédé mis en œuvre selon la revendication 1, dans lequel l'obtention de la métrique de risque inclut en outre :
le calcul d'une entropie croisée entre les actions prescriptives de commande de direction et de vitesse générées et les actions de commande de direction de conducteur et de vitesse actuelles, et la normalisation du calcul de l'entropie croisée pour générer une sortie de métrique de risque,
dans lequel la sortie de métrique de risque est une approximation d'un risque de collision imminent et augmente proportionnellement au fur et à mesure que les actions de commande de direction de conducteur et de vitesse actuelles s'écartent davantage des actions prescriptives de commande de direction et de vitesse générées.

4. Procédé mis en œuvre par ordinateur selon l'une quelconque des revendications 1-3, incluant en outre, en réponse à la sortie de métrique de risque :
le maintien d'un mode de conduite manuelle lorsque la sortie de métrique de risque est inférieure à une valeur seuil prédéterminée, dans lequel le mode de conduite manuelle inclut la permission au véhicule d'appliquer les actions d'entrée de commande de direction de conducteur et de vitesse actuelles, et
l'engagement dans un mode de conduite autonome lorsque la sortie de métrique de risque est égale ou supérieure à la valeur seuil prédéterminée, dans lequel le mode de conduite autonome inclut l'amenée du véhicule à appliquer les actions prescriptives d'entrée de commande de direction et de vitesse.

5. Procédé mis en œuvre par ordinateur selon l'une quelconque des revendications 1-4, incluant en outre la catégorisation de la métrique de risque en niveaux de risque en définissant un niveau de risque particulier comme incluant des sorties de métrique de risque dans une plage prédéterminée entre une valeur limite inférieure et une valeur limite supérieure.

6. Procédé mis en œuvre par ordinateur selon l'une quelconque des revendications 1-5, dans lequel l'interface utilisateur présente, au conducteur, un risque quantitatif incluant la sortie de métrique de risque ou un risque catégoriel incluant le niveau de risque sur la base de la valeur de métrique de risque.

7. Procédé mis en œuvre par ordinateur selon l'une quelconque des revendications 1-6, dans lequel les alertes d'assistance au conducteur incluent un ou plusieurs parmi un affichage visuel, d'un signal audio ou d'un signal haptique.

8. Procédé mis en œuvre par ordinateur selon l'une quelconque des revendications 1-7, dans lequel l'interface utilisateur présente en outre au conducteur les actions prescriptives de commande de direction et de vitesse générées.

9. Procédé mis en œuvre selon l'une quelconque des revendications 1-8, dans lequel les données environnementales sont prétraitées avant d'être fournies au réseau neuronal de bout en bout, le prétraitement incluant en outre :
la tokenisation des données environnementales pour l'état de conduite actuel pour générer des jetons de données environnementales,
la mise en correspondance des jetons de données environnementales avec un espace vectoriel de dimension réduite pour produire des intégrations de données environnementales, et
l'ajout des intégrations de données environnementales à des intégrations positionnelles pour générer des intégrations d'entrée pour le réseau neuronal de bout en bout, dans lequel les intégrations positionnelles préservent des informations spatiales des jetons de données environnementales.

10. Procédé mis en œuvre par ordinateur selon la revendication 9, dans lequel le réseau neuronal de bout en bout basé sur un transformateur est un modèle de transformateur entraîné pour une conduite autonome de bout en bout, et le modèle de transformateur traitant les données environnementales inclut en outre :
le traitement des intégrations d'entrée générées combinées à des intégrations compressées provenant de neuf, ou plus, états de conduite antérieurs sur au moins trois secondes et la génération, en sortie, d'une intégration compressée pour l'état de conduite actuel et des actions prescriptives de commande de direction et de vitesse en réponse à l'état de conduite actuel.

11. Procédé mis en œuvre par ordinateur selon l'une quelconque des revendications 1-10, incluant en outre l'extraction des poids d'attention du modèle de transformateur et la génération, à l'aide des intégrations positionnelles, d'une carte d'attention incluant une projection des poids d'attention extraits, dans lequel :
l'importance d'un poids d'attention particulier augmente proportionnellement à l'importance du poids d'attention particulier lors de la génération des actions prescriptives de direction et de vitesse, et
un objet est implicitement détecté dans une région d'une zone de l'espace réel entourant le véhicule sur la base (i) d'une comparaison d'une valeur moyenne de poids d'attention dans la région et d'une autre valeur moyenne de poids d'attention dans une ou plusieurs régions adjacentes et (ii) des intégrations positionnelles.

12. Procédé mis en œuvre par ordinateur, selon la revendication 9 dans lequel la présentation, via l'interface utilisateur, d'un ou de plusieurs objets détectés dans l'affichage tête haute inclut en outre un codage couleur de poids d'attention dans la carte d'attention permettant une identification visuelle d'objets détectés implicitement et la projection d'une superposition de la carte d'attention codée en couleur sur un affichage tête haute.

13. Procédé mis en œuvre par ordinateur selon l'une quelconque des revendications 1-12, incluant en outre le stockage d'un historique de la vidéo de la caméra et des alertes d'assistance au conducteur présentées au conducteur dans une base de données de conduite, dans lequel la base de données de conduite est disponible pour une analyse de données et un audit de données supplémentaires après que l'activité de conduite est terminée.

14. Procédé mis en œuvre par ordinateur d'entraînement d'un réseau neuronal pour générer des données d'alerte d'assistance au conducteur, le procédé incluant :
la réception de données environnementales pour une séquence d'états de conduite résultant d'une conduite humaine, incluant au moins une vidéo provenant d'une caméra, des retours provenant d'un capteur optique et des données de localisation provenant d'un récepteur GNSS, dans lequel la caméra, le capteur optique et le récepteur GNSS sont couplés à un processeur transporté par un véhicule ;
le traitement des données environnementales comme entrée pour un entraînement par imitation d'un réseau neuronal de bout en bout basé sur un transformateur, incluant l'entraînement du réseau neuronal de bout en bout pour générer des actions prescriptives de commande de direction et de vitesse ;
selon lequel des poids d'attention du réseau neuronal de bout en bout entraîné, basé sur un transformateur, sont disponibles pour être extraits de données de couche cachée et pour indiquer des zones de la vidéo qui contribuent le plus significativement aux actions prescriptives de commande de direction et de vitesse générées.

15. Procédé selon l'une quelconque des revendications 1-14, incluant en outre la configuration d'un système incluant le réseau neuronal de bout en bout et incluant en outre un générateur de métrique de risque, incluant :
des paramètres d'entraînement du générateur de métrique de risque pour générer une métrique de risque normalisée qui quantifie une dissimilarité entre les actions prescriptives de commande direction et de vitesse générées et les actions de commande de direction de conducteur et de vitesse reçues qui diffèrent des actions prescriptives de commande de direction et de vitesse générées, selon lequel la métrique de risque normalisée étant affichée sur un affichage tête haute.
